# EUROPEAN PATENT APPLICATION

(11) **EP 4 844 466 A1**
(43) Date of publication of application: **25.11.2026**
(21) Application number: 25747611.9
(22) Date of filing: 20.01.2025
(51) Int. Cl.: G02B 15/177, G03B 30/00, H04N 23/55

(54) **CAMERA MODULE AND ELECTRONIC DEVICE**

(30) Priority: 30.01.2024 CN 202410133562
(71) Applicant: Huawei Technologies Co., Ltd., Shenzhen, Guangdong 518129 (CN)
(72) Inventor: HE, Baoding, Shenzhen, Guangdong 518129 (CN); ZHANG, Kaiyuan, Shenzhen, Guangdong 518129 (CN); LI, Rui, Shenzhen, Guangdong 518129 (CN); ZHANG, Yi, Shenzhen, Guangdong 518129 (CN); LONG, Sichen, Shenzhen, Guangdong 518129 (CN)
(74) Representative: Huawei European IPR
(86) International application number: PCT/CN2025/073464
(87) International publication number: WO 2025/162039

(57) **Abstract**

This application provides a camera module and an electronic device. The camera module includes a first lens element group, a first reflection element, a second lens element group, a third lens element group, and a photosensitive chip that are sequentially arranged from an object side to an image side. The first lens element group is a fixed lens element group, the first reflection element is configured to change an optical axis in a first direction to an optical axis in a second direction, and the first direction intersects the second direction. The camera module further includes a first driving mechanism and a second driving mechanism. The first driving mechanism is connected to the second lens element group, and the first driving mechanism is configured to drive the second lens element group to move along the optical axis in the second direction. The second driving mechanism is connected to the third lens element group, and the second driving mechanism is configured to drive the third lens element group to move along the optical axis in the second direction. In this way, the camera module has a wider continuous zoom range, enabling closer-range shooting at a wide-angle end and longer-distance shooting at a telephoto end.

## Description

This application claims priority to Chinese Patent Application No. 202410133562.7, filed with the China National Intellectual Property Administration on January 30, 2024 and entitled "CAMERA MODULE AND ELECTRONIC DEVICE", which is incorporated herein by reference in its entirety.

### TECHNICAL FIELD

This application relates to the lens field, and in particular, to a camera module and an electronic device.

### BACKGROUND

With continuous development of portable electronic devices such as mobile phones, users have increasingly high requirements for photographing performance of camera modules of the portable electronic devices. To meet photographing requirements of users, periscope cameras have become a development trend for camera modules. However, existing periscope cameras still suffer from a narrow continuous zoom range.

### SUMMARY

This application provides a camera module with a wide continuous zoom range and an electronic device.

According to a first aspect, this application provides a camera module. The camera module includes a first lens element group, a first reflection element, a second lens element group, a third lens element group, and a photosensitive chip that are sequentially arranged from an object side to an image side. The first lens element group is a fixed lens element group, the first reflection element is configured to change an optical axis in a first direction to an optical axis in a second direction, and the first direction intersects the second direction. The camera module further includes a first driving mechanism and a second driving mechanism. The first driving mechanism is connected to the second lens element group, and the first driving mechanism is configured to drive the second lens element group to move along the optical axis in the second direction. The second driving mechanism is connected to the third lens element group, and the second driving mechanism is configured to drive the third lens element group to move along the optical axis in the second direction.

It may be understood that the first driving mechanism can drive the second lens element group to move along the optical axis in the second direction, and the second driving mechanism can drive the third lens element group to move along the optical axis in the second direction. In this way, the camera module has a wider continuous zoom range, enabling closer-range shooting at a wide-angle end and longer-distance shooting at a telephoto end.

When the camera module is used in an electronic device such as a mobile phone, the electronic device also has the wide continuous zoom range, and may be used to shoot and record an image. The camera module supports various complex shooting application scenarios, for example, indoor and outdoor scenarios, and further supports a plurality of shooting objects, for example, a person and an environment. The camera module has a wider applicable scenario scope and a broader target audience, and therefore can meet different shooting requirements, and improve user experience.

In a possible implementation, the first lens element group and the third lens element group have negative focal power, and the second lens element group has positive focal power. A focal length f1 of the first lens element group, a focal length f2 of the second lens element group, and a focal length f3 of the third lens element group satisfy f1/f2<-3 and -1<f2/f3<-0.5.

It may be understood that allocation among the focal length f1 of the first lens element group, the focal length f2 of the second lens element group, and the focal length f3 of the third lens element group is proper. With the focal power allocation, a refractive index, an Abbe number, a shape, a thickness, and an air gap of a lens element in each lens element group are properly set, to achieve a good balance among aberration, a size, costs, thermal reliability, and the like, and implement a wide continuous zoom ratio range.

It may be understood that allocation among the focal length f1 of the first lens element group, the focal length f2 of the second lens element group, and the focal length f3 of the third lens element group is proper. Therefore, a ratio of a total track length TTL1 of the camera module to a focal length at the wide-angle end EFLT of the camera module, namely, a value of TTL1/EFLT, is small. This can reduce a length of the camera module in the second direction, which helps implement a miniaturized arrangement of the camera module.

It may be understood that allocation among the focal length f1 of the first lens element group, the focal length f2 of the second lens element group, and the focal length f3 of the third lens element group is proper. Therefore, an F-number Fno at the wide-angle end of the camera module is small and has a wide value range, that is, an F-number at the wide-angle end of the camera module is large. This can increase an amount of light entering the camera module, thereby improving imaging quality of the camera module.

It may be understood that allocation among the focal length f1 of the first lens element group, the focal length f2 of the second lens element group, and the focal length f3 of the third lens element group is proper. Therefore, a focusing stroke △L2 of the second lens element group moving along the optical axis in the second direction and a focusing stroke △L3 of the third lens element group moving along the optical axis in the second direction are both small, and the stroke △L2 of the second lens element group moving along the optical axis in the second direction is small relative to the total track length TTL1 of the camera module. This can reduce the length of the camera module in the second direction, that is, reduce the total track length TTL1 of the camera module, which helps reduce a size of the camera module, and helps implement the miniaturized arrangement of the camera module.

In a possible implementation, the focal length f of the first lens element group satisfies -40<f1<-30; and/or the focal length f2 of the second lens element group satisfies 7<f2<12; and/or the focal length f3 of the third lens element group satisfies -18<f3<-12.

It may be understood that allocation among the focal length f1 of the first lens element group, the focal length f2 of the second lens element group, and the focal length f3 of the third lens element group is proper. With the focal power allocation, a refractive index, an Abbe number, a shape, a thickness, and an air gap of a lens element in each lens element group are properly set, to achieve a good balance among aberration, a size, costs, thermal reliability, and the like, and implement the wide continuous zoom ratio range of the camera module.

It may be understood that because allocation among the focal length f1 of the first lens element group, the focal length f2 of the second lens element group, and the focal length f3 of the third lens element group is proper, the ratio of the total track length TTL1 of the camera module to the focal length at the wide-angle end EFLT of the camera module is small, the F-number Fno at the wide-angle end of the camera module is small, both the focusing stroke △L2 of the second lens element group moving along the optical axis in the second direction and the focusing stroke △L3 of the third lens element group moving along the optical axis in the second direction are small, and a ratio of the focusing stroke △L2 of the second lens element group moving along the optical axis in the second direction to the total track length TTL1 of the camera module is small. This helps improve imaging quality of the camera module and facilitate miniaturization and thinning of the camera module.

In a possible implementation, the first lens element group includes a first lens element. The first lens element has positive focal power, and an object-side surface of the first lens element is a convex surface.

It may be understood that the first lens element may be configured to converge light from an external environment, so that a diameter of a light beam entering the camera module is small, and apertures of the second lens element group and the third lens element group are no longer maximum limitations on a size of a clear aperture, which effectively increases the size of the clear aperture of the camera module.

In a possible implementation, a material of the first lens element satisfies Nd<1.65 and Vd>50. Nd represents a refractive index of the material, and Vd represents an Abbe number. It may be understood that the first lens element of the camera module has a small refractive index and a large Abbe number, and transmittance of the first lens element is high. In this way, a light penetration force of the lens element of the first lens element is strong, and optical quality of the first lens element is high, so that an image shot by the camera module is clearer.

In a possible implementation, the first lens element group includes a second lens element. The second lens element is located on an image side of the first lens element. A focal length f11 of the first lens element satisfies f11>0, and a focal length f12 of the second lens element satisfies f12<0.

It may be understood that the first lens element can converge light, and the second lens element can diverge light. The first lens element group including the first lens element and the second lens element can diverge light. It may be understood that the second lens element and the first lens element are used together to form a positive-negative lens element combination structure, which can better resolve an aberration problem like a color difference, provide a higher degree of freedom for the camera module, and achieve better imaging quality.

In a possible implementation, the second lens element group includes a third lens element, a fourth lens element, and a fifth lens element. At least one of the third lens element, the fourth lens element, and the fifth lens element has negative focal power.

It may be understood that the third lens element, the fourth lens element, and the fifth lens element enable the second lens element group to have positive focal power, so that focal power allocation between the second lens element group, and the first lens element group and the third lens element group is proper. A refractive index, an Abbe number, a shape, a thickness, and an air gap of each of the third lens element to the fifth lens element can achieve a good balance among aberration, a size, costs, thermal reliability, and the like, and implement the wide continuous zoom ratio range of the camera module.

It may be understood that the third lens element to the fifth lens element make allocation among the focal length f1 of the first lens element group, the focal length f2 of the second lens element group, and the focal length f3 of the third lens element group proper. Therefore, this helps reduce the ratio of the total track length TTL1 of the camera module to the focal length at the wide-angle end EFLT of the camera module, thereby helping reduce the length of the camera module in the second direction, and helping implement the miniaturized arrangement of the camera module.

It may be understood that the third lens element to the fifth lens element make allocation among the focal length f1 of the first lens element group, the focal length f2 of the second lens element group, and the focal length f3 of the third lens element group proper. Therefore, the F-number Fno at the wide-angle end of the camera module is small and has a wide value range, that is, the F-number at the wide-angle end of the camera module is large. This helps increase the amount of light entering the camera module, thereby helping improve imaging quality of the camera module.

It may be understood that the third lens element to the fifth lens element make allocation among the focal length f1 of the first lens element group, the focal length f2 of the second lens element group, and the focal length f3 of the third lens element group proper. Therefore, the stroke △L2 of the second lens element group moving along the optical axis in the second direction and the focusing stroke △L3 of the third lens element group moving along the optical axis in the second direction are both small, and the stroke △L2 of the second lens element group moving along the optical axis in the second direction is small relative to the total track length TTL1 of the camera module. This helps reduce the length of the camera module in the second direction, which facilitates the miniaturized arrangement of the camera module.

In a possible implementation, the optical lens further includes a stop. The stop is located between the first lens element group and the second lens element group.

It may be understood that when the stop is located between the second lens element and the third lens element, the stop can enable both the wide-angle end and the telephoto end of the camera module to achieve wide aperture effect. In addition, the camera module in this implementation has a large quantity of lens elements configured to correct aberration. This helps obtain good imaging quality. In addition, when the stop is located between the second lens element and the third lens element, this helps correct aberration of the stop.

In a possible implementation, the camera module satisfies 0.1≤IH/EFLT≤0.5. IH represents an image height of the camera module, and EFLT represents a focal length at a telephoto end of the camera module. It may be understood that the image height IH of the camera module is large, and a target surface of the camera module is also large. Therefore, a chip with a larger size and more comprehensive functions may be disposed on the target surface of the camera module, to improve shooting performance of the camera module.

In a possible implementation, the camera module further includes a fourth lens element group. The fourth lens element group is located on an image side of the third lens element group, and the fourth lens element group has positive focal power. It may be understood that the fourth lens element group can converge light diverged by the third lens element group, which can be used to effectively compensate for image quality and improve imaging quality of the camera module.

In a possible implementation, the fourth lens element group is a fixed lens element group. It may be understood that the fourth lens element group enables light to be imaged on an imaging plane, which improves imaging quality of the camera module.

In a possible implementation, the camera module further includes a second reflection element. The second reflection element is located between the third lens element group and an optical filter, the second reflection element is configured to change the optical axis in the second direction to an optical axis in a third direction, and both the third direction and the first direction intersect the second direction.

It may be understood that the second reflection element enables the photosensitive chip to have a larger target surface. Therefore, a chip with a larger size and more comprehensive functions may be disposed on the target surface of the camera module, to improve shooting performance of the camera module.

In a possible implementation, when the camera module is located at the wide-angle end, the first driving mechanism drives the second lens element group to move in a direction away from the first reflection element, and the second driving mechanism drives the third lens element group to move in the direction away from the first reflection element; and when the camera module is located at the telephoto end, the first driving mechanism drives the second lens element group to move in a direction toward the first reflection element, and the second driving mechanism drives the third lens element group to move in the direction toward the first reflection element.

It may be understood that the first driving mechanism can drive the second lens element group to move along the optical axis in the second direction, and the second driving mechanism can drive the third lens element group to move along the optical axis in the second direction. In this way, the camera module has a wide continuous zoom range, which can implement focusing and automatic focusing at different zoom ratios, and improve shooting quality of the camera module at the wide-angle end and the telephoto end.

In a possible implementation, the focal length at the telephoto end EFLT and a focal length at the wide-angle end EFLW satisfy 1.2≤EFLT/EFLW≤3.

It may be understood that because allocation among the focal lengths of the first lens element group to the third lens element group of the camera module is proper, a ratio between the focal length at the wide-angle end EFLW of the camera module and the focal length at the telephoto end EFLT of the camera module, namely, EFLT/EFLW, has a relatively wide value range, enabling the camera module to provide both a larger zoom ratio and a wider zoom range, thereby improving imaging quality of the camera module. Certainly, another value may also be selected for EFLT/EFLW based on an actual requirement.

In a possible implementation, the camera module satisfies 0.6≤TTL1/EFLT≤1.8. TTL1 represents a distance from a vertex at which an object-side surface of the first reflection element intersects a reflective surface of the first reflection element to an imaging plane in an optical axis direction of the camera module.

It may be understood that because allocation among the focal lengths of the first lens element group to the third lens element group of the camera module is proper, the ratio of the total track length TTL1 of the camera module to the focal length at the telephoto end EFLT of the camera module, namely, TTL1/EFLW, has a narrow value range. Therefore, the total track length TTL1 of the camera module is small, which helps reduce the length of the camera module in the second direction, and helps implement the miniaturized arrangement of the camera module.

In a possible implementation, the wide-angle end of the camera module satisfies 1.4≤Fno≤4, and Fno represents an F-number at the wide-angle end of the camera module.

It may be understood that the F-number Fno at the wide-angle end of the camera module is small, that is, the aperture at the wide-angle end of the camera module is large. This can implement a wide aperture feature of the camera module, so that light entering the camera module increases. In addition, this can ensure a high resolution and zoom continuity of the camera module.

In a possible implementation, the camera module satisfies 1≤△L2/△L3≤2, and 0.1≤△L2/TTL1≤0.3. △L2 represents a stroke of the second lens element group moving along the optical axis in the second direction, and △L3 represents a stroke of the third lens element group moving along the optical axis in the second direction.

It may be understood that because allocation among the focal lengths of the first lens element group to the third lens element group of the camera module is proper, the focusing stroke △L2 of the second lens element group moving along the optical axis may be greater than or equal to the focusing stroke △L3 of the third lens element group moving along the optical axis, which can effectively prevent the second lens element group and the third lens element group from colliding with each other during movement in a focusing process. In addition, the focusing stroke △L2 of the second lens element group moving along the optical axis is smaller than the total track length TTL1 of the camera module, and the focusing stroke △L3 of the third lens element group moving along the optical axis is also smaller than the total track length TTL1 of the camera module. In this way, the total track length TTL1 of the camera module can be small, so that the length of the camera module in the second direction is reduced, that is, the total track length TTL1 of the camera module is reduced. This helps reduce the size of the camera module, and helps implement the miniaturized arrangement of the camera module. In addition, in the focusing process of the camera module, the second lens element group and the third lens element group can complete the focusing process only through a small focusing stroke. This achieves faster focusing and continuous zoom speeds of the camera module, higher imaging quality of the camera module, a wider applicable scenario scope, a broader target audience base, and better user experience. Certainly, other values may also be selected for △L2/△L3 and △L2/TTL1 based on an actual requirement.

In a possible implementation, a zoom ratio of the camera module is within a range from three times to five times.

It may be understood that the camera module can implement shooting at the wide-angle end, and can also implement shooting at the telephoto end, so that a plurality of objects can be shot in various complex shooting application scenarios, and an application scope of the camera module is expanded.

In a possible implementation, an equivalent focal length of the camera module is within a range from 70 millimeters to 120 millimeters.

It may be understood that within a wide equivalent focal length range, the camera module can implement lossless optical zoom, and imaging quality of the camera module is high.

According to a second aspect, this application provides an electronic device. The electronic device includes a housing and the foregoing camera module, and the camera module is mounted in the housing.

It may be understood that when the camera module is used in the electronic device, the electronic device has a wide continuous zoom range, and user experience is good. When long-distance object shooting is implemented, the camera module also implements continuous optical zoom. In addition, impact on image quality is small, and imaging quality of the electronic device is good. In addition, a length of the camera module in a first direction is small, that is, a length of the camera module in a thickness direction of the electronic device is small, to implement a thin arrangement of the electronic device.

### BRIEF DESCRIPTION OF DRAWINGS

FIG. 1 is a diagram of a structure of an electronic device in an implementation according to an embodiment of this application;
FIG. 2 is a partial sectional view of the electronic device shown in FIG. 1 at a line A-A in an implementation;
FIG. 3 is a simplified diagram of a partial structure of a camera module shown in FIG. 2 in an implementation;
FIG. 4 is a simplified diagram of a partial structure of a camera module shown in FIG. 3 in an implementation;
FIG. 5 is a simplified diagram of a partial structure of a camera module, at a wide-angle end, shown in FIG. 2 in another implementation;
FIG. 6 is a simplified diagram of a partial structure of a camera module, at a telephoto end, shown in FIG. 2 in another implementation;
FIG. 7 is a diagram of imaging optical distortion of a camera module in a first implementation;
FIG. 8 is a simplified diagram 1 of a partial structure of a camera module, at a wide-angle end, shown in FIG. 2 in still another implementation;
FIG. 9 is a simplified diagram 1 of a partial structure of a camera module, at a telephoto end, shown in FIG. 2 in still another implementation;
FIG. 10 is a diagram of imaging optical distortion of a camera module in a second implementation;
FIG. 11 is a simplified diagram 2 of a partial structure of a camera module, at a wide-angle end, shown in FIG. 2 in yet another implementation;
FIG. 12 is a simplified diagram 2 of a partial structure of a camera module, at a telephoto end, shown in FIG. 2 in yet another implementation;
FIG. 13 is a diagram of imaging optical distortion of a camera module in a third implementation;
FIG. 14 is a diagram of imaging optical distortion of a camera module in a fourth implementation;
FIG. 15 is a simplified diagram 3 of a partial structure of a camera module, at a wide-angle end, shown in FIG. 2 in still yet another implementation;
FIG. 16 is a simplified diagram 3 of a partial structure of a camera module, at a telephoto end, shown in FIG. 2 in still yet another implementation;
FIG. 17 is a diagram of imaging optical distortion of a camera module in a fifth implementation; and
FIG. 18 is a simplified diagram of a partial structure of a camera module shown in FIG. 2 in another implementation.

### DESCRIPTION OF EMBODIMENTS

The following clearly and completely describes the technical solutions in embodiments of this application with reference to the accompanying drawings in embodiments of this application.

In the descriptions of this application, it should be noted that the terms "mount" and "connection" should be understood in a broad sense, unless otherwise specified and limited. For example, "connection" may be a detachable connection or a non-detachable connection, or may be a direct connection or an indirect connection through an intermediate medium, or may be an electrical connection or a mechanical connection. "Fastened" means that two parts are connected to each other and a relative positional relationship remains unchanged after the two parts are connected to each other. In addition, integrating two parts into an integral structure through an integral molding process means that, in a process of forming one of the two parts, the part is connected to the other part, and the two parts do not need to be connected through secondary processing (for example, bonding, welding, snap-fit, or screwing). That a part A and a part B are disposed opposite to each other may be as follows: The part A is projected in a target direction to obtain a projection C, the part B is projected in a target direction to obtain a projection D, and the projection C and the projection D may at least largely overlap. In some embodiments, largely overlapping may be any one of the following cases: The projection C is completely located in the projection D; or the projection D is completely located in the projection C; or the projection C and the projection D cross each other, and a proportion of a cross area of the projection C and the projection D to the projection C or the projection D is greater than 50%.

Orientation terms mentioned in embodiments of this application, for example, "inside" and "outside", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, the orientation terms cannot be understood as a limitation on embodiments of this application. A person of ordinary skill in the art may understand specific meanings of the foregoing terms based on specific cases.

In this specification and claims of this application, the terms "first", "second", and the like are intended to distinguish between similar objects but do not indicate a specific order or sequence. It should be understood that data used in this way is interchangeable in proper circumstances, so that embodiments of this application can be implemented in an order other than the order illustrated or described herein. In addition, objects distinguished by "first", "second", and the like are usually of one type, and a quantity of objects is not limited. For example, there may be one or more first objects. In addition, in this specification and claims, "and/or" indicates at least one of connected objects, and the character "/" usually indicates an "or" relationship between associated objects. "A plurality of" means at least two.

To facilitate understanding of an optical lens provided in embodiments of this application, related nouns used in this application are explained.

An optical axis is an axis passing through a center of each lens element.

An area close to an optical axis may be understood as an area that is on a surface of a lens element and that is close to the optical axis.

When a lens element is used as a boundary, a side on which a shot object is located is an object side, and a surface of the lens element that is close to the object side is referred to as an object-side surface.

When a lens element is used as a boundary, a side on which an image of a shot object is located is an image side, and a surface of the lens element that is close to the image side is referred to as an image-side surface.

A focal length (focal length), also referred to as a focal distance, is a measurement manner for measuring convergence or divergence of light in an optical system, and means a vertical distance from an optical center of a lens element or a lens element group to a focal plane when a clear image of an infinite scene is formed on the focal plane through the lens element or the lens element group. From a practical perspective, the focal length may be understood as a distance from a center of a lens to an imaging plane. A position of an optical center of a fixed-focus lens is fixed.

Focal power (focal power) is defined as a difference between a beam convergence degree on an image side and a beam convergence degree on an object side, is a reciprocal of a focal length of a lens, and represents a capability of an optical system to refract light.

Positive focal power may also be referred to as positive refractive power, and indicates that a lens element has a positive focal length and can converge light.

Negative focal power may also be referred to as negative refractive power, and indicates that a lens element has a negative focal length and can diverge light.

An aperture is an apparatus configured to control an amount of light passing through a lens, and is usually in the lens.

An F-number (Fno) is a ratio (a reciprocal of a relative aperture) of a focal length of a lens to a diameter of a clear aperture of the lens. A smaller F-number indicates a larger amount of light entering the lens in a same unit of time. A larger F-number indicates a smaller depth of field, so that shot background content is blurred. This is similar to effect achieved by a long-focus lens.

For a field of view (field of view, FOV), in an optical instrument, using a lens of the optical instrument as a vertex, an included angle formed by two edges of a maximum range within which a target object can be observed through the lens is referred to as the field of view. A size of the field of view determines a range of vision of the optical instrument. A larger field of view indicates a broader vision, and a smaller optical ratio.

For a half field of view (half field of view, HFOV), in an optical instrument, using a lens of the optical instrument as a vertex, an included angle formed by an optical axis and one edge of a maximum range within which a target object can be observed through the lens is referred to as the half field of view. A size of the half field of view is half of a size of a field of view.

An effective focal length (effective focal length, EFL) of an optical lens is defined as a distance from a center of a camera module to a focus point.

A wide-angle end (wide-angle end) is a shortest focal length of a lens, namely, a short-focus end. The lens has a largest angle of view and is used to take close shots, especially large-field close shots.

A focal length at a wide-angle end (effective focal length at a wide-angle end, EFLW) of a camera module is defined as a distance from a center of the wide-angle end of the camera module to a focus point.

A telephoto end (telephoto end) is a longest focal length of a lens, namely, a long-focus end. The lens has a smallest angle of view and is used to take long shots, especially partial close-up.

A focal length at a telephoto end (effective focal length at a telephoto end, EFLT) of a camera module is defined as a distance from a center of the telephoto end of the camera module to a focus point.

A total track length (total track length, TTL) is defined as a direction from an object side to an image side, and a distance from an object-side surface that is of a camera module and that is closest to a first lens element of a shot object to an imaging plane, and is a main factor for determining a camera height.

TTL1 represents a distance from a vertex at which an object-side surface of a first reflection element intersects a reflective surface of the first reflection element to an imaging plane.

An image height (Image Height, IH) of an imaging plane represents a half of a diagonal length of an effective pixel region on a photosensitive chip, namely, a radius of an imaging circle.

A refractive index of a material (Nd) is defined as an absolute value of a ratio of a propagation speed of light to a speed of light in a vacuum when an electromagnetic wave (including visible light) is propagated in the material, and is an indicator that describes a propagation speed and a bending degree of light in the material.

An Abbe number (Vd), namely, a dispersion coefficient, is a difference ratio of refractive indices of an optical material at different wavelengths, and represents a degree of dispersion of the material.

Distortion (distortion), also referred to as image distortion, is a degree at which an image formed by an optical system for an object is distorted relative to the object. Distortion is caused because a height of a point at which chief rays with different fields of view intersect a Gaussian image plane after the chief rays pass through the optical system is not equal to an ideal image height due to impact of a stop spherical aberration, and a difference between the two heights is distortion. Therefore, distortion only changes an imaging position of an off-axis object point on an ideal plane, so that a shape of an image is distorted, but definition of the image is not affected.

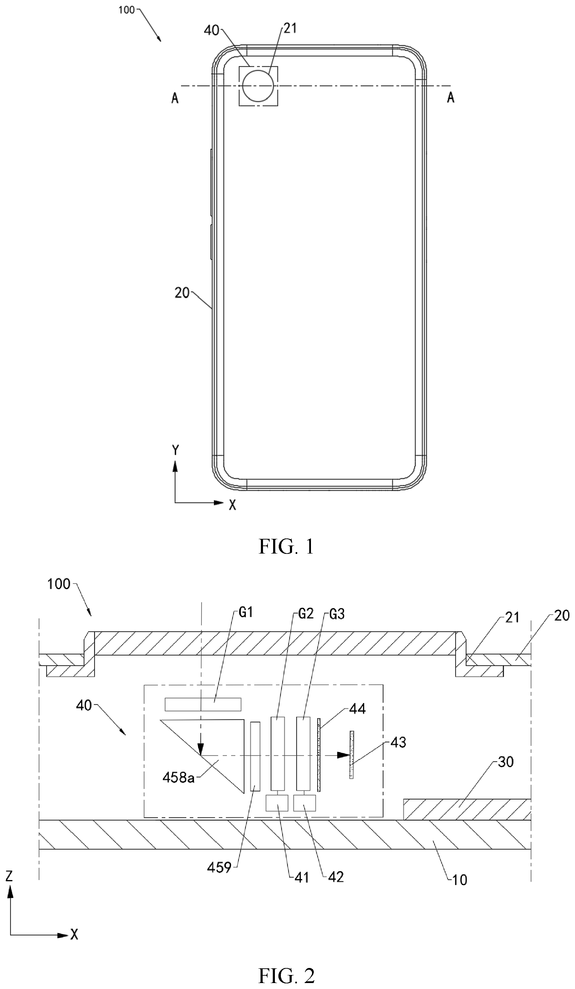

FIG. 1 is a diagram of a structure of an electronic device 100 in an implementation according to an embodiment of this application.

As shown in FIG. 1, in some embodiments, the electronic device 100 may be a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, a VR helmet, or another device that is in any form and that has shooting and video recording functions. The electronic device 100 in the embodiment shown in FIG. 1 is described by using the mobile phone as an example.

FIG. 2 is a partial sectional view of the electronic device 100 shown in FIG. 1 at a line A-A in an implementation.

As shown in FIG. 2, with reference to FIG. 1, the electronic device 100 includes a screen 10, a housing 20, a main circuit board 30, and a camera module 40. The camera module 40 may be a front-facing camera module, or may be a rear-facing camera module. It may be understood that FIG. 1 and FIG. 2 schematically show only some parts included in the electronic device 100. Actual shapes, actual sizes, actual positions, and actual structures of these parts are not limited to those in FIG. 1 and FIG. 2. In addition, when the electronic device 100 is a device in another form, the electronic device 100 may not include the screen 10 and the main circuit board 30.

In some embodiments, the screen 10 is mounted on the housing 20, and jointly encloses the inside of the electronic device 100 together with the housing 20. The inside of the electronic device 100 may be used for placing a component, for example, a battery, a receiver, or a microphone, of the electronic device 100. The screen 10 may be a flat screen or may be a curved screen.

For example, the camera module 40 may be located inside of the electronic device 100. The housing 20 has a light-transmitting portion 21. A shape of the light-transmitting portion 21 is not limited to a circular shape shown in FIG. 1, and may alternatively be an elliptic shape or an irregular shape. The light-transmitting portion 21 connects the inside of the electronic device 100 to the outside of the electronic device 100. Light outside the electronic device 100 may enter the inside of the electronic device 100 through the light-transmitting portion 21. The camera module 40 may capture light that enters the inside of the electronic device 100.

It may be understood that for ease of description in the following, the camera module 40 is defined to have a first direction Z, a second direction X, and a third direction Y. The first direction Z may be a thickness direction of the camera module 40. The second direction X may be a length direction of the camera module 40, and the second direction X is perpendicular to the first direction Z. The third direction Y may be a width direction of the camera module 40, and the third direction Y is perpendicular to the first direction Z and the second direction X. In another implementation, a coordinate system of the camera module 40 may be flexibly set based on a specific actual requirement.

The foregoing specifically describes structures of related parts of the camera module 40. The following specifically describes the structure of the camera module 40 and settings of related optical parameters with reference to the accompanying drawings.

As shown in FIG. 2, the camera module 40 includes a first lens element group G1, a first reflection element 458a, a second lens element group G2, a third lens element group G3, an optical filter 44, and a photosensitive chip 43 that are sequentially arranged from an object side to an image side. The first lens element group G1 is a fixed lens element group, the first reflection element 458a is configured to change an optical axis in a first direction to an optical axis in a second direction, and the first direction intersects the second direction. The photosensitive chip 43 may also be referred to as an image sensor. The camera module 40 forms an image on the photosensitive chip 43. In other words, the camera module 40 forms an imaging plane on the photosensitive chip 43. For example, the optical filter 44 may be configured to filter out infrared light, blue light, or the like in light before the light enters the photosensitive chip 43, to ensure that the photosensitive chip 43 has good imaging quality.

It may be understood that the camera module 40 may further include fewer or more structures. For example, the camera module 40 may include fewer structures. For example, the camera module 40 may not include the optical filter 44. It should be noted that FIG. 2 merely schematically shows the camera module 40 in a dashed-line box.

As shown in FIG. 2, the camera module 40 further includes a first driving mechanism 41 and a second driving mechanism 42. For example, the first driving mechanism 41 may be connected to the second lens element group G2, and the first driving mechanism 41 may be configured to drive the second lens element group G2 to move along the optical axis in the second direction. The second driving mechanism 42 may be connected to the third lens element group G3, and the second driving mechanism 42 may be configured to drive the third lens element group G3 to move along the optical axis in the second direction.

It may be understood that the first driving mechanism 41 can drive the second lens element group G2 to move along the optical axis in the second direction, and the second driving mechanism 42 can drive the third lens element group G3 to move along the optical axis in the second direction. In this way, the camera module 40 has a wider continuous zoom range, enabling closer-range shooting at a wide-angle end and longer-distance shooting at a telephoto end.

It may be understood that because the second lens element group G2 moves along the optical axis in the second direction, and the third lens element group G3 also moves along the optical axis in the second direction, the second lens element group G2 and the third lens element group G3 do not occupy too much space in the first direction. Therefore, a length of the camera module 40 in the first direction is reduced, and space utilization of the camera module 40 is improved, which helps implement a thin arrangement of the camera module 40. When the camera module 40 is used in the electronic device 100, a height of the camera module 40 in a thickness direction of the electronic device 100 is small, which helps implement a thin arrangement of the electronic device 100.

It may be understood that the first reflection element 458a changes the optical axis in the first direction to the optical axis in the second direction, so that a thickness of the camera module 40 in the first direction can be reduced. In this way, when the camera module 40 is used in the electronic device 100 such as a mobile phone, the camera module 40 does not increase a size of the electronic device 100 in the thickness direction, which helps implement the thin arrangement of the electronic device 100.

When the camera module 40 is used in the electronic device 100 such as a mobile phone, the electronic device 100 also has the wide continuous zoom range, and may be used to shoot and record an image. The camera module 40 supports various complex shooting application scenarios, for example, indoor and outdoor scenarios, and further supports a plurality of shooting objects, for example, a person and an environment. The camera module 40 has a wider applicable scenario scope and a broader target audience, and therefore can meet different shooting requirements, and improve user experience.

For example, the first driving mechanism 41 may include a magnet and a coil (not shown in the figure). The coil cooperates with the magnet under a condition that the coil is energized, to drive the second lens element group G2 to move along the optical axis in the second direction. In another implementation, the first driving mechanism 41 may also be an SMA motor. This is not specifically limited in this application.

For example, the second driving mechanism 42 may include a magnet and a coil (not shown in the figure). The coil cooperates with the magnet under a condition that the coil is energized, to drive the third lens element group G3 to move along the optical axis in the second direction. In another implementation, the second driving mechanism 42 may also be an SMA motor. This is not specifically limited in this application.

It may be understood that a structure of the first driving mechanism 41 may be the same as or may be different from a structure of the second driving mechanism 42. In another implementation, the first driving mechanism 41 and the second driving mechanism 42 may also be integrated into an integral driving apparatus.

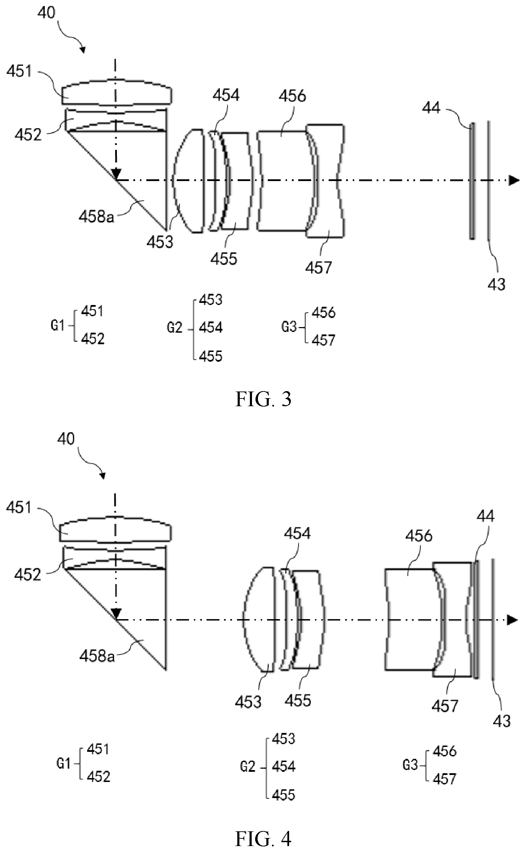

FIG. 3 is a simplified diagram of a partial structure of the camera module 40 shown in FIG. 2 in an implementation.

As shown in FIG. 3, in a process of switching the camera module 40 to the wide-angle end, the first driving mechanism 41 may be used to drive the second lens element group G2 to move in a direction away from the first reflection element 458a, and the second driving mechanism 42 may drive the third lens element group G3 to move in the direction away from the first reflection element 458a. In this case, when the camera module 40 is located at the wide-angle end, the camera module 40 may focus on a short-distance or even micro-distance shooting object (also including a user of the camera module 40).

FIG. 4 is a simplified diagram of a partial structure of the camera module 40 shown in FIG. 3 in an implementation.

As shown in FIG. 4, in a process of switching the camera module 40 to the telephoto end, the first driving mechanism 41 may be used to drive the second lens element group G2 to move in a direction toward the first reflection element 458a, and the second driving mechanism 42 may drive the third lens element group G3 to move in the direction toward the first reflection element 458a. In this case, when the camera module 40 is located at the telephoto end, the camera module 40 may focus on a long-distance shooting object (also including a user of the camera module 40).

In an implementation, a focal length f1 of the first lens element group G1 satisfies f1<0, that is, the first lens element group G1 may have negative focal power. A focal length f2 of the second lens element group G2 satisfies f2>0, that is, the second lens element group G2 may have positive focal power. A focal length f3 of the third lens element group G3 satisfies f3<0, that is, the third lens element group G3 may have negative focal power.

For example, the focal length f1 of the first lens element group G1, the focal length f2 of the second lens element group G2, and the focal length f3 of the third lens element group G3 may satisfy f1/f2<-3 and -1<f2/f3<-0.5. For example, f1/f2 may be equal to -3.01, -3.5, -4.0, - 5.55, -8.23, -10, -11.11, or the like, and f2/f3 may be equal to -0.99, -0.8, -0.75, -0.6, -0.51, or the like.

It may be understood that allocation among the focal length f1 of the first lens element group G1, the focal length f2 of the second lens element group G2, and the focal length f3 of the third lens element group G3 is proper. With the focal power allocation, a refractive index, an Abbe number, a shape, a thickness, and an air gap of a lens element in each lens element group are properly set, to achieve a good balance among aberration, a size, costs, thermal reliability, and the like, and implement a wide continuous zoom ratio range.

It may be understood that allocation among the focal length f1 of the first lens element group G1, the focal length f2 of the second lens element group G2, and the focal length f3 of the third lens element group G3 is proper. Therefore, a ratio of a total track length TTL1 of the camera module 40 to a focal length at the wide-angle end EFLT of the camera module 40, namely, a value of TTL1/EFLT, is small. This can reduce a length of the camera module 40 in the second direction, which helps implement a miniaturized arrangement of the camera module 40.

It may be understood that allocation among the focal length f1 of the first lens element group G1, the focal length f2 of the second lens element group G2, and the focal length f3 of the third lens element group G3 is proper. Therefore, an F-number Fno at the wide-angle end of the camera module 40 is small and has a wide value range, that is, an F-number at the wide-angle end of the camera module 40 is large. This can increase an amount of light entering the camera module 40, thereby improving imaging quality of the camera module 40.

It may be understood that allocation among the focal length f1 of the first lens element group G1, the focal length f2 of the second lens element group G2, and the focal length f3 of the third lens element group G3 is proper. Therefore, a focusing stroke △L2 of the second lens element group G2 moving along the optical axis in the second direction and a focusing stroke △L3 of the third lens element group G3 moving along the optical axis in the second direction are both small, and the stroke △L2 of the second lens element group G2 moving along the optical axis in the second direction is small relative to the total track length TTL1 of the camera module 40. This can reduce the length of the camera module 40 in the second direction, that is, reduce the total track length TTL1 of the camera module 40, which helps reduce a size of the camera module 40, and helps implement the miniaturized arrangement of the camera module 40.

For example, the focal length f1 of the first lens element group G1 may satisfy - 40<f1<-30. For example, f1 may be equal to -30.1, -33, -35.12, -38, -39.99, or the like. For example, the focal length f2 of the second lens element group G2 may satisfy 7<f2<12. For example, f2 may be equal to 7.01, 8.8, 9.5, 10.66, 11, 11.99, or the like. For example, the focal length f3 of the third lens element group G3 may satisfy -18<f3<-12. For example, f3 may be equal to -12.12, -13, -14.3, -16.66, -17.2, -17.99, or the like.

It may be understood that allocation among the focal length f1 of the first lens element group G1, the focal length f2 of the second lens element group G2, and the focal length f3 of the third lens element group G3 is proper. With the focal power allocation, a refractive index, an Abbe number, a shape, a thickness, and an air gap of a lens element in each lens element group are properly set, to achieve a good balance among aberration, a size, costs, thermal reliability, and the like, and implement the wide continuous zoom ratio range of the camera module 40.

It may be understood that because allocation among the focal length f1 of the first lens element group G1, the focal length f2 of the second lens element group G2, and the focal length f3 of the third lens element group G3 is proper, the ratio of the total track length TTL1 of the camera module 40 to the focal length at the wide-angle end EFLT of the camera module 40 is small, the F-number Fno at the wide-angle end of the camera module 40 is small, both the focusing stroke △L2 of the second lens element group G2 moving along the optical axis in the second direction and the focusing stroke △L3 of the third lens element group G3 moving along the optical axis in the second direction are small, and a ratio of the focusing stroke △L2 of the second lens element group G2 moving along the optical axis in the second direction to the total track length TTL1 of the camera module 40 is small. This helps improve imaging quality of the camera module 40 and implement a thin arrangement of the camera module 40.

As shown in FIG. 3 and FIG. 4, for example, the first lens element group G1 of the camera module 40 may include a first lens element 451 and a second lens element 452 that are sequentially arranged from the object side to the image side. A focal length of the first lens element 451 is f11, and f11 may satisfy f11>0. A focal length of the second lens element 452 is f12, and f12 may satisfy f12<0. It may be understood that the first lens element 451 may have positive focal power, and the first lens element 451 may be configured to converge light from an external environment. The second lens element 452 may have negative focal power, and the second lens element 452 may be configured to diversify light that is converged by the first lens element 451.

In an implementation, an object-side surface of the first lens element 451 of the camera module 40 is a convex surface. It may be understood that the first lens element 451 may be configured to converge light from an external environment, so that a diameter of a light beam entering the camera module 40 is small, and apertures of the second lens element group G2 and the third lens element group G3 are no longer maximum limitations on a size of a clear aperture, which effectively increases the size of the clear aperture of the camera module 40.

It may be understood that the second lens element 452 and the first lens element 451 are used together to form a positive-negative lens element combination structure, which can better resolve an aberration problem like a color difference, provide a higher degree of freedom for the camera module 40, and achieve better imaging quality.

In another implementation, the first lens element group G1 may alternatively include one or more lens elements. A specific quantity of lens elements is not limited in this application.

In an implementation, a material of the first lens element 451 of the camera module 40 satisfies Nd<1.65 and Vd>50. Nd represents a refractive index of the material, and Vd represents an Abbe number of the material. For example, the refractive index of the first lens element 451 may be 1.64, 1.55, 1.47, 1.28, or the like, and the Abbe number of the first lens element 451 may be 50.5, 51, 52, 53.66, or the like.

It may be understood that the first lens element 451 of the camera module 40 has a small refractive index and a large Abbe number, and transmittance of the first lens element 451 is high. In this way, a light penetration force of the lens element of the first lens element 451 is strong, and optical quality of the first lens element 451 is high, so that an image shot by the camera module 40 is clearer.

As shown in FIG. 3 and FIG. 4, the second lens element group G2 may include a third lens element 453, a fourth lens element 454, and a fifth lens element 455 that are sequentially arranged from the object side to the image side. At least one of the third lens element 453, the fourth lens element 454, and the fifth lens element 455 has negative focal power. For example, a focal length f23 of the third lens element 453 satisfies f23>0, a focal length f24 of the fourth lens element 454 satisfies f24<0, and a focal length f25 of the fifth lens element 455 satisfies f25>0.

It may be understood that the sixth lens element 456 and the seventh lens element 457 enable the third lens element group G3 to have negative focal power, so that focal power allocation between the third lens element group G3, and the first lens element group G1 and the second lens element group G2 is proper. A refractive index, an Abbe number, a shape, a thickness, and an air gap of each of the sixth lens element 456 and the seventh lens element 457 can achieve a good balance among aberration, a size, costs, thermal reliability, and the like, and implement the wide continuous zoom ratio range.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, this helps reduce the ratio of the total track length TTL1 of the camera module 40 to the focal length at the wide-angle end EFLT of the camera module 40, thereby helping reduce the length of the camera module 40 in the second direction, and helping implement the miniaturized arrangement of the camera module 40.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, the F-number Fno at the wide-angle end of the camera module 40 is small and has a wide value range, that is, the F-number at the wide-angle end of the camera module 40 is large. This helps increase the amount of light entering the camera module 40, thereby helping improve imaging quality of the camera module 40.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, the stroke △L2 of the second lens element group G2 moving along the optical axis in the second direction and the focusing stroke △L3 of the third lens element group G3 moving along the optical axis in the second direction are both small, and the stroke △L2 of the second lens element group G2 moving along the optical axis in the second direction is small relative to the total track length TTL1 of the camera module 40. This helps reduce the length of the camera module 40 in the second direction, which facilitates the miniaturized arrangement of the camera module 40.

In another implementation, the focal length f23 of the third lens element 453, the focal length f24 of the fourth lens element 454, and the focal length f25 of the fifth lens element 455 may alternatively satisfy other relationships. A specific focal length range is not limited in this application.

In another implementation, the second lens element group G2 may alternatively include one or more lens elements. A specific quantity of lens elements is not limited in this application.

As shown in FIG. 3 and FIG. 4, the third lens element group G3 may include a sixth lens element 456 and a seventh lens element 457 that are sequentially arranged from the object side to the image side. At least one of the sixth lens element 456 and the seventh lens element 457 has negative focal power. For example, a focal length f36 of the sixth lens element satisfies f36<0, and a focal length f37 of the seventh lens element satisfies f37>0.

It may be understood that the sixth lens element 456 and the seventh lens element 457 enable the third lens element group G3 to have negative focal power, so that focal power allocation between the third lens element group G3, and the first lens element group G1 and the second lens element group G2 is proper. A refractive index, an Abbe number, a shape, a thickness, and an air gap of each of the sixth lens element 456 and the seventh lens element 457 can achieve a good balance among aberration, a size, costs, thermal reliability, and the like, and implement the wide continuous zoom ratio range of the camera module 40.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, this helps reduce the ratio of the total track length TTL1 of the camera module 40 to the focal length at the wide-angle end EFLT of the camera module 40, thereby helping reduce the length of the camera module 40 in the second direction, and helping implement the miniaturized arrangement of the camera module 40.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, the F-number Fno at the wide-angle end of the camera module 40 is small and has a wide value range, that is, the F-number at the wide-angle end of the camera module 40 is large. This helps increase the amount of light entering the camera module 40, thereby helping improve imaging quality of the camera module 40.

It may be understood that the sixth lens element 456 and the seventh lens element 457 make allocation among the focal length f1 of the first lens element group G1, the focal length f2 of the second lens element group G2, and the focal length f3 of the third lens element group G3 proper. Therefore, the stroke △L2 of the second lens element group G2 moving along the optical axis in the second direction and the focusing stroke △L3 of the third lens element group G3 moving along the optical axis in the second direction are both small, and the stroke △L2 of the second lens element group G2 moving along the optical axis in the second direction is small relative to the total track length TTL1 of the camera module 40. This helps reduce the length of the camera module 40 in the second direction, which facilitates the miniaturized arrangement of the camera module 40.

In another implementation, the focal length f36 of the sixth lens element 456 and the focal length f37 of the seventh lens element 457 may alternatively satisfy other relationships. A specific focal length range is not limited in this application.

In another implementation, the third lens element group G3 may alternatively include one or more lens elements. A specific quantity of lens elements is not limited in this application.

For example, each lens element of the camera module 40 includes two opposite surfaces, and at least one of the surfaces is a lens element surface. The lens element surface is a curved surface that is convex or concave in an extension direction of an optical axis of the camera module 40, and the lens element surface may participate in imaging and aberration correction. Specifically, light entering the camera module 40 may be refracted on the lens element surface, and a path of the light is changed. In this way, the lens element surface may change the path of the light entering the camera module 40, which makes the light a converge or diverge accordingly, to participate in imaging.

As shown in FIG. 2, the camera module 40 may further include a stop 459. For example, the stop 459 may be located between every two lens elements.

For example, the stop 459 may be an aperture stop. The aperture stop is used to limit the amount of light entering the camera module 40, and reduce stray light in the camera module 40, to change imaging luminance. In another implementation, a position of the stop 459 is not limited to a position, shown in FIG. 2, that the stop 459 is located between the second lens element 452 and the third lens element 453. The position of the stop 459 may be flexibly adjusted based on an actual requirement.

It may be understood that when the stop 459 is located between the second lens element 452 and the third lens element 453, the stop 459 can enable both the wide-angle end and the telephoto end of the camera module 40 to achieve wide aperture effect. In addition, the camera module 40 in this implementation has a large quantity of lens elements configured to correct aberration. This helps obtain good imaging quality. In addition, when the stop 459 is located between the second lens element 452 and the third lens element 453, this helps correct aberration of the stop 459.

In another implementation, the camera module 40 may not include the stop 459. It may be understood that FIG. 2 shows merely an example of some parts of the camera module 40, and actual shapes, actual sizes, and actual structures of these parts are not limited by FIG. 2.

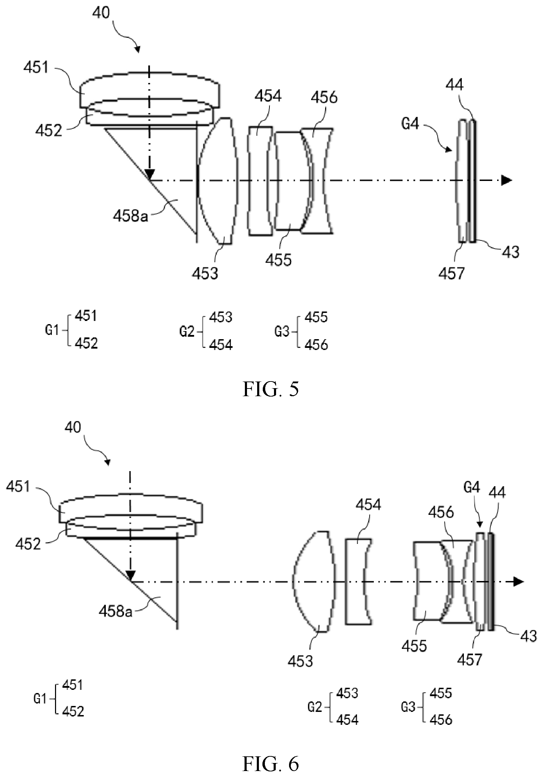

FIG. 5 is a simplified diagram of a partial structure of the camera module 40, at the wide-angle end, shown in FIG. 2 in another implementation. FIG. 6 is a simplified diagram of a partial structure of the camera module 40, at the telephoto end, shown in FIG. 2 in another implementation.

As shown in FIG. 5 and FIG. 6, the camera module 40 may further include a fourth lens element group G4. For example, the second lens element group G2 may include a third lens element 453 and a fourth lens element 454. The third lens element group G3 may include a fifth lens element 455 and a sixth lens element 456, and the fourth lens element group G4 may include a seventh lens element 457.

As shown in FIG. 5 and FIG. 6, the fourth lens element group G4 may be located on an image side of the third lens element group G3. In other words, the fourth lens element group G4 is located between the third lens element group G3 and the photosensitive chip 43. In this way, the fourth lens element group G4 may be configured to effectively compensate for image quality and improve imaging quality of the camera module 40.

For example, the fourth lens element group G4 is a fixed lens element group, and the fourth lens element group G4 has positive focal power. It may be understood that the fourth lens element group G4 can converge light diverged by the third lens element group G3, so that the light can be imaged on the imaging plane, to improve imaging quality of the camera module 40.

It may be understood that a focal length at the wide-angle end of the camera module 40 is EFLW. A focal length at the telephoto end of the camera module 40 is EFLT.

It may be understood that when the focal length f1 of the first lens element group G1, the focal length f2 of the second lens element group G2, and the focal length f3 of the third lens element group G3 satisfy f1/f2<-3 and -1<f2/f3<-0.5, the camera module 40 may satisfy 0.1≤IH/EFLT≤0.5. For example, IH/EFLT may be equal to 0.1, 0.23, 0.28, 0.3, 0.35, 0.46, 0.5, or the like. It may be understood that the image height IH of the camera module 40 is large, and a target surface of the camera module 40 is also large. Therefore, a chip with a larger size and more comprehensive functions may be disposed on the target surface of the camera module 40, to improve shooting performance of the camera module 40. Certainly, another value may also be selected for IH/EFLT based on an actual requirement.

It may be understood that when the focal length f1 of the first lens element group G1, the focal length f2 of the second lens element group G2, and the focal length f3 of the third lens element group G3 satisfy f1/f2<-3 and -1<f2/f3<-0.5, the focal length at the wide-angle end EFLW of the camera module 40 and the focal length at the telephoto end EFLT of the camera module 40 may satisfy 1.2≤EFLT/EFLW≤3. For example, EFLT/EFLW may be equal to 1.2, 1.36, 1.5, 1.88, 2.38, 3, or the like.

It may be understood that because allocation among the focal lengths of the first lens element group G1 to the third lens element group G3 of the camera module 40 is proper, a ratio of the focal length at the wide-angle end EFLW of the camera module 40 to the focal length at the telephoto end EFLT of the camera module 40, namely, EFLT/EFLW, has a wide value range, and the camera module 40 has both a large zoom ratio and a wide zoom ratio range, which can improve imaging quality of the camera module 40. Certainly, another value may also be selected for EFLT/EFLW based on an actual requirement.

For example, the first reflection element 458a may be located between the first lens element group G1 and the second lens element group G2. In other words, the first reflection element 458a may be located between the second lens element 452 and the third lens element 453. It may be understood that when light that is from an external environment and that is diverged by the first lens element group G1 passes through the first reflection element 458a, the light is deflected inside the first reflection element 458a, and the light is deflected from the first direction to the second direction. Because a propagation direction of light in an external environment is different from a propagation direction of the light in the second lens element group G2 and the third lens element group G3, a placement position, an angle, and the like of the camera module 40 in the camera module 40 or the electronic device 100 are flexible, and the camera module 40 is more widely used. Because light is propagated in the second direction in the camera module 40, the length of the camera module 40 in the first direction can be reduced, so that the camera module 40 can be used in a thin electronic device such as a mobile phone or a tablet. In addition, the light shrinks through a long optical path in the first reflection element 458a, and a diameter of a beam is reduced. Therefore, the first reflection element 458a makes an aperture of the second lens element group G2 no longer a maximum limitation on a size of a clear aperture, which effectively increases the size of the clear aperture of the camera module 40.

It may be understood that when the focal length f1 of the first lens element group G1, the focal length f2 of the second lens element group G2, and the focal length f3 of the third lens element group G3 satisfy f1/f2<-3 and -1<f2/f3<-0.5, the camera module 40 may satisfy 0.6≤TTL1/EFLT≤1.8. TTL1 represents a distance from a vertex at which an object-side surface of the first reflection element 458a intersects a reflective surface of the first reflection element 458a to the imaging plane. For example, TTL1/EFLT may be equal to 0.6, 0.8, 0.95, 1.2, 1.66, 1.8, or the like. It may be understood that because allocation among the focal lengths of the first lens element group G1 to the third lens element group G3 of the camera module 40 is proper, the ratio of the total track length TTL1 of the camera module 40 to the focal length at the telephoto end EFLT of the camera module 40, namely, TTL1/EFLW, has a narrow value range. Therefore, the total track length TTL1 of the camera module 40 is small, which helps reduce the length of the camera module 40 in the second direction, and helps implement the miniaturized arrangement of the camera module 40.

It may be understood that when the focal length f1 of the first lens element group G1, the focal length f2 of the second lens element group G2, and the focal length f3 of the third lens element group G3 satisfy f1/f2<-3 and -1<f2/f3<-0.5, an F-number Fno at the wide-angle end of the camera module 40 may satisfy 1.4≤Fno≤4. For example, Fno may be equal to 1.4, 1.9, 2.38, 3.66, 3.8, 4, or the like. It may be understood that the F-number Fno at the wide-angle end of the camera module 40 is small, that is, the aperture at the wide-angle end of the camera module 40 is large. This can implement a wide aperture feature of the camera module 40, so that light entering the camera module 40 increases. In addition, this can ensure a high resolution and zoom continuity of the camera module 40. Certainly, another value may also be selected for Fno based on an actual requirement.

It may be understood that the first lens element group G1 may remain fastened in a focusing process of the camera module 40, and a focusing stroke of the first lens element group G1 moving along the optical axis is △L1, and △L1 may satisfy △L1=0. The second lens element group G2 may move along the optical axis in the focusing process of the camera module 40, and a focusing stroke of the second lens element group G2 moving along the optical axis is △L2, and △L2 may satisfy △L2>0. The third lens element group G3 may also move along the optical axis in the focusing process of the camera module 40, and a focusing stroke of the third lens element group G3 moving along the optical axis is △L3, and △L3 may satisfy △L3>0.

In an implementation, when the focal length f1 of the first lens element group G1, the focal length f2 of the second lens element group G2, and the focal length f3 of the third lens element group G3 satisfy: when f1/f2<-3 and -1<f2/f3<-0.5, the focusing stroke △L2 of the second lens element group G2 moving along the optical axis, the focusing stroke △L3 of the third lens element group G3 moving along the optical axis, and the total track length TTL1 of the camera module 40 may satisfy 1≤△L2/△L3≤2 and 0.1≤△L2/TTL1≤0.3. For example, △L2/△L3 may be equal to 1, 1.2, 1.33, 1.68, 1.8, 2, or the like, and △L2/TTL1 may be equal to 0.1, 0.15, 0.2, 0.23, 0.28, 0.3, or the like. It may be understood that because allocation among the focal lengths of the first lens element group G1 to the third lens element group G3 of the camera module 40 is proper, the focusing stroke △L2 of the second lens element group G2 moving along the optical axis may be greater than or equal to the focusing stroke △L3 of the third lens element group G3 moving along the optical axis, which can effectively prevent the second lens element group G2 and the third lens element group G3 from colliding with each other during movement in the focusing process. In addition, the focusing stroke △L2 of the second lens element group G2 moving along the optical axis is smaller than the total track length TTL1 of the camera module 40, and the focusing stroke △L3 of the third lens element group G3 moving along the optical axis is also smaller than the total track length TTL1 of the camera module 40. In this way, the total track length TTL1 of the camera module 40 can be small, so that the length of the camera module 40 in the second direction is reduced. This helps reduce the size of the camera module 40, and helps implement the miniaturized arrangement of the camera module 40. In addition, in the focusing process of the camera module 40, the second lens element group G2 and the third lens element group G3 can complete the focusing process only through a small focusing stroke. This achieves a faster focusing speed of the camera module 40, higher imaging quality of the camera module 40, a wider applicable scenario scope, a broader target audience base, and better user experience. Certainly, other values may also be selected for △L2/△L3 and △L2/TTL1 based on an actual requirement. It may be understood that in another implementation, the camera module 40 may not meet the foregoing relationships.

It may be understood that a zoom ratio of the camera module 40 is within a range from three times to five times. For example, the camera module 40 can implement shooting at the wide-angle end, and can also implement shooting at the telephoto end, so that a plurality of objects can be shot in various complex shooting application scenarios, and an application scope of the camera module 40 is expanded. It may be understood that an equivalent focal length of the camera module 40 is within a range from 70 millimeters to 120 millimeters. For example, within a wide equivalent focal length range, the camera module 40 can implement optical zoom, and imaging quality of the camera module 40 is high.

The following describes in more detail some specific but non-limiting examples in implementations of this application with reference to related accompanying drawings.

First implementation: Refer to FIG. 3 and FIG. 4. In this implementation, the camera module 40 includes seven lens elements. The camera module 40 includes the first lens element 451, the second lens element 452, the first reflection element 458a, the third lens element 453, the fourth lens element 454, the fifth lens element 455, the sixth lens element 456, the seventh lens element 457, the optical filter 44, and the photosensitive chip 43 that are sequentially arranged from the object side to the image side. The first lens element 451, the third lens element 453, the fourth lens element 454, and the sixth lens element 456 all have positive focal power. The second lens element 452, the fifth lens element 455, and the seventh lens element 457 all have negative focal power. It may be understood that the first lens element 451 and the second lens element 452 may form the first lens element group G1. The third lens element 453, the fourth lens element 454, and the fifth lens element 455 may form the second lens element group G2. The sixth lens element 456 and the seventh lens element 457 may form the third lens element group G3. It may be understood that the first lens element 451 satisfies Nd=1.64 and Vd=23.5. It may be understood that a light penetration force of the lens element of the first lens element 451 is strong, and optical quality of the first lens element 451 is high, so that an image shot by the camera module 40 is clearer.

It may be understood that in Table 1 and Table 2, S1 and S2 may respectively represent an object-side surface and an image-side surface of the first lens element 451; S3 and S4 may respectively represent an object-side surface and an image-side surface of the second lens element 452; S5 and S6 may respectively represent an object-side surface and an image-side surface of the first reflection element 458a; S7 and S8 may respectively represent an object-side surface and an image-side surface of the third lens element 453; S9 and S10 may respectively represent an object-side surface and an image-side surface of the fourth lens element 454; S11 and S12 may respectively represent an object-side surface and an image-side surface of the fifth lens element 455; S13 and S14 may respectively represent an object-side surface and an image-side surface of the sixth lens element 456; S15 and S16 may respectively represent an object-side surface and an image-side surface of the seventh lens element 457; and S17 and S18 may respectively represent an object-side surface and an image-side surface of the optical filter 44. It should be noted that in this application, symbols such as S1, S2, S3, S4, S5, S6, S7, S8, S9, S10, S11, S12, S13, and S14 represent same meanings, and are not described again when the symbols appear below again.

Some design parameters of the camera module 40 in the first implementation of this application are shown in Table 1.

**Table 1 Some design parameters of the lens elements of the camera module 40 in the first implementation**

| Surface number | Description | Surface type | R (mm) | Th (mm) | Nd | Vd | f (mm) |
|---|---|---|---|---|---|---|---|
| S1 | First lens element 451 | Odd aspherical surface | 14.41 | 1.65 | 1.66 | 20.37 | 13.57 |
| S2 | | Odd aspherical surface | -23.18 | 0.52 | | | |
| S3 | Second lens element 452 | Odd aspherical surface | -298.05 | 0.63 | 1.62 | 25.92 | -9.07 |
| S4 | | Odd aspherical surface | 5.73 | 0.60 | | | |
| S5 | First reflection element 458a | Spherical surface | Infinity | 6.60 | 1.85 | 23.78 | / |
| S6 | | Spherical surface | Infinity | 0.50 | | | |
| S7 | Third lens element 453 (Stop) | Odd aspherical surface | 5.58 | 2.06 | 1.50 | 81.56 | 10.28 |
| S8 | | Odd aspherical surface | -54.71 | 0.67 | | | |
| S9 | Fourth lens element 454 | Odd aspherical surface | 50.78 | 0.78 | 1.54 | 56.00 | 18.66 |
| S10 | | Odd aspherical surface | -12.69 | 0.25 | | | |
| S11 | Fifth lens element 455 | Odd aspherical surface | -5.67 | 1.49 | 1.66 | 20.37 | - 39.15 |
| S12 | | Odd aspherical surface | -8.01 | 0.60 | | | |
| S13 | Sixth lens element 456 | Odd aspherical surface | -11.66 | 3.50 | 1.66 | 30.37 | 35.94 |
| S14 | | Odd aspherical surface | -8.79 | 0.18 | | | |
| S15 | Seventh lens element 457 | Odd aspherical surface | 18.05 | 1.34 | 1.54 | 56.00 | - 10.85 |
| S16 | | Odd aspherical surface | 4.34 | 8.82 | | | |
| S17 | Optical filter 44 | Spherical surface | Infinity | 0.21 | 1.52 | 64.20 | / |
| S18 | | Spherical surface | Infinity | 1.00 | | | |
| | Imaging plane | Spherical surface | Infinity | 0.00 | | | |

R represents a curvature radius of each of the first lens element 451 to the seventh lens element 457, the first reflection element 458a, and the optical filter 44 of the camera module 40. Nd represents a refractive index of a material of each of the first lens element 451 to the seventh lens element 457, the first reflection element 458a, and the optical filter 44 of the camera module 40. Vd represents an Abbe number of each of the first lens element 451 to the seventh lens element 457, the first reflection element 458a, and the optical filter 44 of the camera module 40. It should be noted that in this application, when R, Nd, and Vd appear in the following tables again, symbols representing same meanings as the symbols R, Nd, and Vd are not described again.

In addition, Th represents a thickness of each of the first lens element 451 to the seventh lens element 457, and the optical filter 44 of the camera module 40. A thickness of S1 is a distance between the object-side surface of the first lens element 451 and the image-side surface of the first lens element 451. A thickness of S2 is a distance between the image-side surface of the first lens element 451 and the object-side surface of the second lens element 452. A thickness of S3 is a distance between the object-side surface of the second lens element 452 and the image-side surface of the second lens element 452. A thickness of S4 is a distance between the image-side surface of the second lens element 452 and the first reflection element 458a. A thickness of S5 is a distance between the first reflection element 458a and the third lens element 453. A thickness of S7 is a distance between the object-side surface of the third lens element 453 and the image-side surface of the third lens element 453. A thickness of S8 is a distance between the image-side surface of the third lens element 453 and the object-side surface of the fourth lens element 454. A thickness of S9 is a distance between the object-side surface of the fourth lens element 454 and the image-side surface of the fourth lens element 454. A thickness of S10 is a distance between the image-side surface of the fourth lens element 451 and the object-side surface of the fifth lens element 455. A thickness of S11 is a distance between the object-side surface of the fifth lens element 455 and the image-side surface of the fifth lens element 455. A thickness of S12 is a distance between the image-side surface of the fifth lens element 455 and the object-side surface of the sixth lens element 456. A thickness of S13 is a distance between the object-side surface of the sixth lens element 456 and the image-side surface of the sixth lens element 456. A thickness of S14 is a distance between an image-side surface of the sixth lens element 456 and an object-side surface of the seventh lens element 457. A thickness of S15 is a distance between an object-side surface of the seventh lens element 457 and an image-side surface of the seventh lens element 457. A thickness of S16 is a distance between the image-side surface of the seventh lens element 457 and the object-side surface of the optical filter 44. A thickness of S17 is a distance between the object-side surface of the optical filter 44 and the image-side surface of the optical filter 44. A thickness of S18 is a distance between the image-side surface of the optical filter 44 and the imaging plane. It should be noted that in this application, when the foregoing symbols appear in the following tables again, symbols representing same meanings as the foregoing symbols are not described again.

In addition, aspheric coefficients of the lens elements of the camera module 40 in the first implementation of this application are shown in Table 2.

**Table 2 Aspheric coefficients of the lens elements of the camera module 40 in the first implementation**

| | Type | K | A₂ | A₄ | A₆ | A₈ | A₁₀ |
|---|---|---|---|---|---|---|---|
| S1 | Odd aspherical surface | 0.00E+00 | 0.00E+00 | 4.70E-04 | -4.16E-06 | 1.46E-06 | -2.22E-07 |
| S2 | Odd aspherical surface | 0.00E+00 | 0.00E+00 | 3.23E-03 | -3.00E-04 | 1.23E-05 | 9.94E-07 |
| S3 | Odd aspherical surface | 5.00E+01 | 0.00E+00 | -1.79E-03 | -1.05E-05 | -1.74E-05 | 5.31E-06 |
| S4 | Odd aspherical surface | 0.00E+00 | 0.00E+00 | -6.38E-03 | 5.51E-04 | -9.39E-05 | 1.58E-05 |
| S7 | Odd aspherical surface | -5.00E-01 | 0.00E+00 | 4.10E-04 | -4.27E-05 | 3.01E-05 | -5.50E-06 |
| S8 | Odd aspherical surface | 0.00E+00 | 0.00E+00 | -5.01E-04 | 6.38E-05 | -6.62E-06 | 3.27E-07 |
| S9 | Odd aspherical surface | 0.00E+00 | 0.00E+00 | -1.40E-03 | -3.30E-04 | -1.93E-05 | 2.17E-06 |
| S10 | Odd aspherical surface | -1.69E+00 | 0.00E+00 | 1.67E-03 | -5.19E-04 | 8.80E-06 | 1.83E-06 |
| S11 | Odd aspherical surface | 0.00E+00 | 0.00E+00 | 3.77E-03 | 8.88E-05 | -1.80E-05 | 3.37E-07 |
| S12 | Odd aspherical surface | 0.00E+00 | 0.00E+00 | 1.81E-03 | 2.93E-04 | -8.61E-05 | 2.05E-05 |
| S13 | Odd aspherical surface | 0.00E+00 | 0.00E+00 | 2.62E-03 | -4.15E-04 | 1.38E-04 | -3.40E-05 |
| S14 | Odd aspherical surface | -1.75E+00 | 0.00E+00 | -9.37E-04 | 6.12E-04 | -1.15E-04 | 8.93E-06 |
| S15 | Odd aspherical surface | -9.62E+00 | 0.00E+00 | -1.57E-02 | 1.58E-03 | -4.98E-05 | -4.02E-05 |
| S16 | Odd aspherical surface | -8.82E+00 | 0.00E+00 | -4.65E-03 | -1.64E-04 | 1.41E-04 | -2.62E-05 |

| | Type | A₁₂ | A₁₄ | A₁₆ | A₁₈ | A₂₀ | A₂₂ |
|---|---|---|---|---|---|---|---|
| S1 | Odd aspherical surface | 1.81E-08 | -9.33E-10 | 2.23E-11 | 0.00E+00 | 0.00E+00 | 0.00E+00 |
| S2 | Odd aspherical surface | -2.10E-07 | 1.28E-08 | -2.63E-10 | 0.00E+00 | 0.00E+00 | 0.00E+00 |
| S3 | Odd aspherical surface | -6.58E-07 | 3.96E-08 | -9.24E-10 | 0.00E+00 | 0.00E+00 | 0.00E+00 |
| S4 | Odd aspherical surface | -1.72E-06 | 1.02E-07 | -2.50E-09 | 0.00E+00 | 0.00E+00 | 0.00E+00 |
| S7 | Odd aspherical surface | 5.02E-07 | -1.71E-08 | -3.04E-10 | 2.77E-11 | 0.00E+00 | 0.00E+00 |
| S8 | Odd aspherical surface | 0.00E+00 | 0.00E+00 | 0.00E+00 | 0.00E+00 | 0.00E+00 | 0.00E+00 |
| S9 | Odd aspherical surface | 0.00E+00 | 0.00E+00 | 0.00E+00 | 0.00E+00 | 0.00E+00 | 0.00E+00 |
| S10 | Odd aspherical surface | -4.62E-07 | 8.27E-08 | -6.66E-09 | 2.10E-10 | 0.00E+00 | 0.00E+00 |
| S11 | Odd aspherical surface | 3.04E-07 | -4.61E-08 | 2.70E-09 | -4.91E-11 | 0.00E+00 | 0.00E+00 |
| S12 | Odd aspherical surface | -3.13E-06 | 2.90E-07 | -1.49E-08 | 3.25E-10 | 0.00E+00 | 0.00E+00 |
| S13 | Odd aspherical surface | 5.37E-06 | -5.13E-07 | 2.70E-08 | -6.03E-10 | 0.00E+00 | 0.00E+00 |
| S14 | Odd aspherical surface | -2.07E-07 | 1.55E-08 | -3.97E-09 | 1.94E-10 | 0.00E+00 | 0.00E+00 |
| S15 | Odd aspherical surface | 9.52E-06 | -9.55E-07 | 4.38E-08 | -7.08E-10 | 0.00E+00 | 0.00E+00 |
| S16 | Odd aspherical surface | 2.68E-06 | -1.53E-07 | 4.19E-09 | -3.51E-11 | 0.00E+00 | 0.00E+00 |

A₂, A₄, A₆, A₈, A₁₀, A₁₂, A₁₄, A₁₆, A₁₈, A₂₀, and A₂₂ represent the aspheric coefficients. Polynomial coefficients (such as A₁ and A₃) that do not exist in the table are all 0. It should be noted that each parameter in the table is represented through scientific notation. For example, 4.70E-04 is 4.70x10⁻⁴, and -3.51E-11 is -3.51x10⁻¹¹.

It may be understood that in the 14 aspherical surfaces of the camera module 40 shown in Table 1 and Table 2, surface types z of all even and odd aspherical surfaces may be limited by using but not limited to the following aspheric formula: $z = \frac{{cr}^{2}}{1 + \sqrt{1 - \left(K+1\right) {c}^{2} {r}^{2}}} + {\sum }_{i} {A}_{i} {r}^{i}$

z represents a sagittal height of the aspherical surface; r represents a radial coordinate of the aspherical surface; c represents a curvature at a vertex of the aspherical surface; K represents a conic coefficient; and Aᵢ represents an i^{th}-order aspheric coefficient. By substituting the design parameters of the first lens element 451 to the seventh lens element 457 of the camera module 40 into the foregoing aspheric formula, the surface types of the object-side surface and the image-side surface of the first lens element 451 to the seventh lens element 457 of the camera module 40 in the first implementation of this application can be obtained.

Based on the data in Table 1 and Table 2, the following Table 3 shows some parameters of the camera module 40 in the first implementation of this application.

**Table 3 Some parameters of the camera module 40 in the first implementation**

| EFLT | Fno | TTL1 | Sa | IH |
|---|---|---|---|---|
| 20.00 | 3.00 | 31.40 | 2.05 | 3.60 |

EFLT represents a focal length at the telephoto end of the camera module 40, namely, the focal length at the telephoto end EFLT of the camera module 40, and satisfies EFLT=20.00 millimeters. Fno represents an F-number at the wide-angle end of the camera module 40, namely, the F-number Fno at the wide-angle end of the camera module 40, and satisfies Fno=3.00. TTL1 represents a total track length, namely, the total track length TTL1 of the camera module 40, and satisfies TTL1=31.40 millimeters. Sa represents a width of the object-side surface or the image-side surface of the first reflection element 458a, namely, a size Sa of the first reflection element 458a of the camera module 40, and satisfies Sa=2.05 millimeters. IH represents an image height of the imaging plane, namely, the image height IH of the camera module 40, and satisfies IH=3.60 millimeters.

It may be understood that the focal length f1 of the first lens element group G1 of the camera module 40 satisfies f1=-36. The focal length f2 of the second lens element group G2 of the camera module 40 satisfies f1=9.7. The focal length f3 of the third lens element group G3 of the camera module 40 satisfies f3=-16.74.

In this case, the focal length f1 of the first lens element group G1 of the camera module 40 and the focal length f2 of the second lens element group G2 of the camera module 40 satisfy f1/f2=-3.71. The focal length f2 of the second lens element group G2 of the camera module 40 and the focal length f3 of the third lens element group G3 of the camera module 40 satisfy f2/f3=-0.58. It may be understood that allocation among the focal length f1 of the first lens element group G1, the focal length f2 of the second lens element group G2, and the focal length f3 of the third lens element group G3 is proper, and therefore a wide continuous zoom ratio range of the camera module 40 can be implemented.

It may be understood that a ratio of the image height IH of the camera module 40 to the focal length at the wide-angle end is IH/EFLT=0.18, and it may be understood that a target surface of the camera module 40 is large. Therefore, a chip with a larger size and more comprehensive functions may be disposed on the target surface of the camera module 40, to improve shooting performance of the camera module 40.

It may be understood that the focal length at the telephoto end EFLT of the camera module 40 and the focal length at the wide-angle end EFLW of the camera module 40 satisfy EFLT/EFLW=1.67. It may be understood that EFLT/EFLW of the camera module 40 has a wide value range, and the camera module 40 has both a large zoom ratio and a wide zoom ratio range, which can improve imaging quality of the camera module 40.

It may be understood that the total track length TTL1 of the camera module 40 and the focal length at the telephoto end EFLT of the camera module 40 satisfy TTL1/EFLT=1.57. It may be understood that TTL1/EFLW of the camera module 40 has a narrow value range. Therefore, the total track length TTL1 of the camera module 40 is small, which helps implement the miniaturized arrangement of the camera module 40.

It may be understood that the F-number Fno at the wide-angle end of the camera module 40 is small, and the F-number Fno at the wide-angle end of the camera module 40 is small, that is, the aperture at the wide-angle end of the camera module 40 is large. In this way, a wide aperture feature of the camera module 40 can be implemented, to ensure a high resolution and zoom continuity of the camera module 40.

It may be understood that the focusing stroke △L2 of the second lens element group G2 of the camera module 40 and the focusing stroke △L3 of the third lens element group G3 of the camera module 40 satisfy △L2/△L3=1.28. It may be understood that the total track length TTL1 of the camera module 40 may be small, which helps implement the miniaturized arrangement of the camera module 40. In addition, this achieves a faster focusing speed of the camera module 40, higher imaging quality of the camera module 40, a wider applicable scenario scope, a broader target audience base, and better user experience.

In addition, the size Sa of the first reflection element 458a is small, so that a length of the camera module 40 in the first direction can be reduced, thereby reducing the size of the camera module 40. When the camera module 40 is used in the camera module 40 or the electronic device 100, it is conductive to implementing an ultra-thin arrangement of the camera module 40 or the electronic device 100.

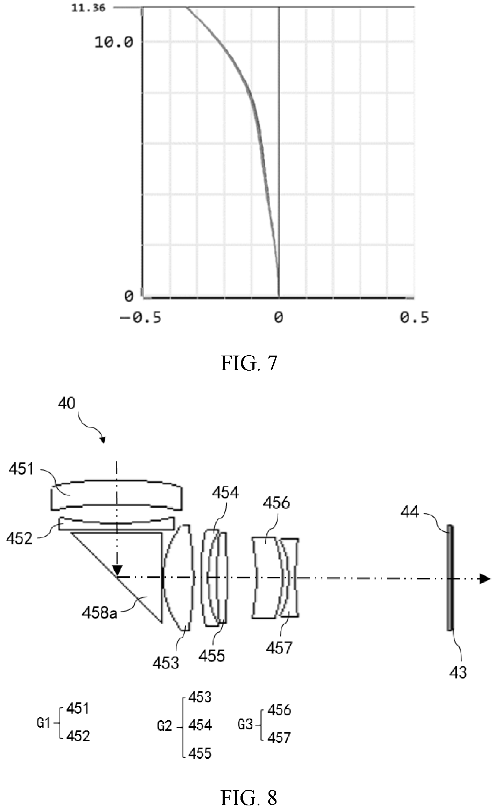

FIG. 7 is a diagram of imaging optical distortion of the camera module 40 in the first implementation. In a coordinate system in FIG. 7, a horizontal coordinate represents an optical distortion percentage, and a vertical coordinate represents a field of view (FOV, °). It should be noted that in this application, when the foregoing horizontal coordinate and the vertical coordinate appear in the following coordinate systems again, a horizontal coordinate and a vertical coordinate representing same meanings as the foregoing horizontal coordinate and the vertical coordinate are not described again.

As shown in FIG. 7, an optical distortion ratio of the camera module 40 in the first implementation of this application in all different field of views is less than 1%, an optical distortion degree of an image is small, and imaging quality of the camera module 40 is high.

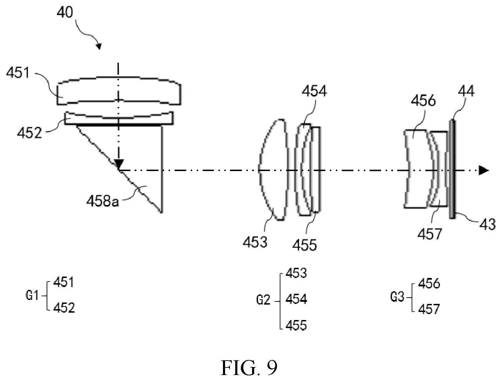

Second implementation: Refer to FIG. 8 and FIG. 9. FIG. 8 is a simplified diagram 1 of a partial structure of the camera module 40, at the wide-angle end, shown in FIG. 2 in still another implementation. FIG. 9 is a simplified diagram 1 of a partial structure of the camera module 40, at the telephoto end, shown in FIG. 2 in still another implementation. In this implementation, the camera module 40 has seven lens elements. The camera module 40 includes the first lens element 451, the second lens element 452, the first reflection element 458a, the third lens element 453, the fourth lens element 454, the fifth lens element 455, the sixth lens element 456, the seventh lens element 457, the optical filter 44, and the photosensitive chip 43 that are sequentially arranged from the object side to the image side. The first lens element 451, the third lens element 453, the fifth lens element 455, and the sixth lens element 456 all have positive focal power. The second lens element 452, the fourth lens element 454, and the seventh lens element 457 all have negative focal power.

In this implementation, the first lens element 451 and the second lens element 452 may form the first lens element group G1. The third lens element 453, the fourth lens element 454, and the fifth lens element 455 may form the second lens element group G2. The sixth lens element 456 and the seventh lens element 457 may form the third lens element group G3.

In this implementation, the first lens element 451 satisfies Nd=1.64 and Vd=23.5. It may be understood that a light penetration force of the lens element of the first lens element 451 is strong, and optical quality of the first lens element 451 is high, so that an image shot by the camera module 40 is clearer.

Some design parameters of the camera module 40 in the second implementation of this application are shown in Table 4.

**Table 4 Some design parameters of the lens elements of the camera module 40 in the second implementation**

| Surface number | Description | Surface type | R (mm) | Th (mm) | Nd | Vd | f (mm) |
|---|---|---|---|---|---|---|---|
| S1 | First lens element 451 | Odd aspherical surface | 25.90 | 1.91 | 1.64 | 23.5 | 119.50 |
| S2 | | Odd aspherical surface | 37.90 | 1.41 | | | |
| S3 | Second lens element 452 | Odd aspherical surface | -15.97 | 0.50 | 1.54 | 56.0 | -36.18 |
| S4 | | Odd aspherical surface | -84.41 | 0.18 | | | |
| S5 | First reflection element 458a | Spherical surface | Infinity | 7.00 | 1.77 | 49.6 | / |
| S6 | | Spherical surface | Infinity | 0.10 | | | |
| S7 | Third lens element 453 (Stop) | Odd aspherical surface | 6.37 | 2.29 | 1.50 | 81.6 | 10.50 |
| S8 | | Odd aspherical surface | -25.61 | 0.61 | | | |
| S9 | Fourth lens element 454 | Odd aspherical surface | 19.30 | 0.54 | 1.66 | 20.4 | -28.39 |
| S10 | | Odd aspherical surface | 9.45 | 0.67 | | | |
| S11 | Fifth lens element 455 | Odd aspherical surface | 24.79 | 0.78 | 1.54 | 56.0 | 30.00 |
| S12 | | Odd aspherical surface | -47.73 | 2.25 | | | |
| S13 | Sixth lens element 456 | Odd aspherical surface | -8.61 | 2.00 | 1.66 | 20.4 | 24.85 |
| S14 | | Odd aspherical surface | -6.19 | 0.43 | | | |
| S15 | Seventh lens element 457 | Odd aspherical surface | 423.13 | 0.52 | 1.54 | 56.0 | -9.63 |
| S16 | | Odd aspherical surface | 5.19 | 11.72 | | | |
| S17 | Optical filter 44 | Spherical surface | Infinity | 0.30 | 1.52 | 64.2 | / |
| S18 | | Spherical surface | Infinity | 0.10 | | | |
| | Imaging plane | Spherical surface | Infinity | 0.00 | | | |

In addition, aspheric coefficients of the lens elements of the camera module 40 in the second implementation of this application are shown in Table 5.

**Table 5 Aspheric coefficients of the lens elements of the camera module 40 in the second implementation**

| | Type | Norm R | K | A₂ | A₄ | A₆ | A₈ | A₁₀ |
|---|---|---|---|---|---|---|---|---|
| S1 | Odd aspherical surface | 5.00E+00 | 0.00E+00 | 0.00E+00 | -2.39E-01 | 4.15E-01 | -2.46E-01 | -6.34E-01 |
| S2 | Odd aspherical surface | 4.53E+00 | 0.00E+00 | 0.00E+00 | -2.99E-01 | 7.22E-01 | -8.01E-01 | -9.38E-01 |
| S3 | Odd aspherical surface | 4.50E+00 | 0.00E+00 | 0.00E+00 | 4.99E-01 | 1.02E+00 | - 7.06E+0 0 | 1.31E+01 |
| S4 | Odd aspherical surface | 4.55E+00 | 0.00E+00 | 0.00E+00 | 6.91E-01 | 4.93E-01 | - 6.17E+00 | 1.18E+01 |
| S7 | Odd aspherical surface | 4.10E+00 | 0.00E+00 | 0.00E+00 | -8.07E-03 | -1.42E-01 | 8.75E-01 | - 3.44E+00 |
| S8 | Odd aspherical surface | 4.09E+00 | 0.00E+00 | 0.00E+00 | -3.28E-01 | 1.64E+00 | - 4.03E+00 | 5.70E+00 |
| S9 | Odd aspherical surface | 3.85E+00 | 0.00E+00 | 0.00E+00 | - 1.03E+0 0 | 4.75E+00 | - 1.16E+01 | 2.00E+01 |
| S10 | Odd aspherical surface | 3.61E+00 | 0.00E+00 | 0.00E+00 | -7.76E-01 | 3.41E+00 | - 7.71E+00 | 1.32E+01 |
| S11 | Odd aspherical surface | 3.61E+00 | 0.00E+00 | 0.00E+00 | -1.78E-01 | 6.09E-01 | - 1.33E+00 | 1.29E+00 |
| S12 | Odd aspherical surface | 3.61E+00 | 0.00E+00 | 0.00E+00 | 9.77E-02 | 4.31E-02 | -3.14E-01 | 4.02E-01 |
| S13 | Odd aspherical surface | 3.56E+00 | 0.00E+00 | 0.00E+00 | 7.51E-01 | - 1.15E+00 | 3.82E+00 | - 1.09E+01 |
| S14 | Odd aspherical surface | 3.50E+00 | 0.00E+00 | 0.00E+00 | 5.90E-01 | - 1.52E+00 | 8.27E+00 | - 2.72E+01 |
| S15 | Odd aspherical surface | 3.49E+00 | 0.00E+00 | 0.00E+00 | - 4.49E+00 | 9.87E+00 | - 5.60E+00 | - 3.88E+01 |
| S16 | Odd aspherical surface | 3.81E+00 | 0.00E+00 | 0.00E+00 | - 6.94E+00 | 2.41E+01 | - 6.27E+01 | 1.17E+02 |

| | Type | A₁₂ | A₁₄ | A₁₆ | A₁₈ | A₂₀ | A₂₂ | A₂₄ |
|---|---|---|---|---|---|---|---|---|
| S1 | Odd aspherical surface | 3.12E+00 | - 5.05E+00 | 4.36E+00 | - 1.99E+00 | 3.78E-01 | 0.00E+00 | 0.00E+00 |
| S2 | Odd aspherical surface | 5.80E+00 | - 1.01E+01 | 9.66E+00 | - 5.13E+00 | 1.23E+00 | 1.06E-02 | 0.00E+00 |
| S3 | Odd aspherical surface | - 1.04E+01 | 1.55E-01 | 5.77E+00 | - 3.62E+00 | 5.99E-01 | 3.24E-02 | 0.00E+00 |
| S4 | Odd aspherical surface | - 6.93E+00 | - 8.15E+00 | 1.66E+01 | - 1.08E+0 1 | 2.56E+00 | 0.00E+00 | 0.00E+00 |
| S7 | Odd aspherical surface | 7.89E+00 | - 1.09E+01 | 8.25E+00 | - 2.43E+00 | -5.69E-01 | 3.89E-01 | 0.00E+00 |
| S8 | Odd aspherical surface | - 4.43E+00 | 5.46E-01 | 2.48E+00 | - 2.24E+00 | 6.53E-01 | -9.18E-03 | 0.00E+00 |
| S9 | Odd aspherical surface | - 2.75E+0 1 | 3.03E+01 | - 2.35E+0 1 | 1.07E+01 | - 2.06E+0 0 | 0.00E+00 | 0.00E+00 |
| S10 | Odd aspherical surface | - 1.89E+0 1 | 2.13E+01 | - 1.56E+01 | 5.97E+00 | -6.61E-01 | -1.13E-01 | 0.00E+00 |
| S11 | Odd aspherical surface | -4.46E-01 | -3.22E-03 | 0.00E+00 | 0.00E+00 | 0.00E+00 | 0.00E+00 | 0.00E+00 |
| S12 | Odd aspherical surface | -1.55E-01 | 0.00E+00 | 0.00E+00 | 0.00E+00 | 0.00E+00 | 0.00E+00 | 0.00E+00 |
| S13 | Odd aspherical surface | 2.17E+01 | - 2.87E+01 | 2.35E+01 | - 1.08E+01 | 2.09E+00 | -1.47E-03 | 0.00E+00 |
| S14 | Odd aspherical surface | 5.52E+01 | - 6.89E+01 | 5.03E+01 | - 1.88E+01 | 2.24E+00 | 2.06E-01 | 0.00E+00 |
| S15 | Odd aspherical surface | 1.37E+02 | - 2.24E+02 | 2.01E+02 | - 9.43E+01 | 1.86E+01 | - 2.01E+00 | 1.09E+00 |
| S16 | Odd aspherical surface | - 1.47E+02 | 1.17E+02 | - 5.28E+01 | 1.12E+01 | -7.07E-01 | -1.49E-02 | 0.00E+00 |

A₂, A₄, A₆, A₈, A₁₀, A₁₂, A₁₄, A₁₆, A₁₈, A₂₀, A₂₂, and A₂₄ represent the aspheric coefficients. Polynomial coefficients (such as A₁ and A₃) that do not exist in the table are all 0. Norm R represents a normalized radius of an object-side surface and an image-side surface of each of the first lens element 451 to the seventh lens element 457.

It may be understood that in the 14 aspherical surfaces of the camera module 40 shown in Table 4 and Table 5, surface types z of all even and odd aspherical surfaces may be limited by using but not limited to the following aspheric formula: $z = \frac{{cr}^{2}}{1 + \sqrt{1 - \left(K+1\right) {c}^{2} {r}^{2}}} + {\sum }_{i} {A}_{i} {r}^{i}$

z represents a sagittal height of the aspherical surface; r represents a radial coordinate of the aspherical surface; c represents a curvature at a vertex of the aspherical surface; K represents a conic coefficient; and Aᵢ represents an i^{th}-order aspheric coefficient. By substituting the design parameters of the first lens element 451 to the seventh lens element 457 of the camera module 40 into the foregoing aspheric formula, the surface types of the object-side surface and the image-side surface of the first lens element 451 to the seventh lens element 457 of the camera module 40 in the second implementation of this application can be obtained.

Based on the data in Table 4 and Table 5, the following Table 6 shows some parameters of the camera module 40 in the second implementation of this application.

**Table 6 Some parameters of the camera module 40 in the second implementation**

| EFLT | Fno | TTL1 | Sa | IH |
|---|---|---|---|---|
| 24.00 | 3.26 | 33.32 | 3.50 | 3.60 |

The focal length at the telephoto end EFLT of the camera module 40 satisfies EFLT=24.00 millimeters. The F-number Fno at the wide-angle end of the camera module 40 satisfies Fno=3.26. The total track length TTL1 of the camera module 40 satisfies TTL1=33.32 millimeters. A size Sa of the first reflection element 458a of the camera module 40 satisfies Sa=3.50 millimeters. The image height IH of the camera module 40 satisfies IH=3.60 millimeters.

It may be understood that the focal length f1 of the first lens element group G1 of the camera module 40 satisfies f1=-55.05. The focal length f2 of the second lens element group G2 of the camera module 40 satisfies f1=10.79. The focal length f3 of the third lens element group G3 of the camera module 40 satisfies f3=-14.27.

In this case, the focal length f1 of the first lens element group G1 of the camera module 40 and the focal length f2 of the second lens element group G2 of the camera module 40 satisfy f1/f2=-5.10. The focal length f2 of the second lens element group G2 of the camera module 40 and the focal length f3 of the third lens element group G3 of the camera module 40 satisfy f2/f3=-0.76. It may be understood that allocation among the focal length f1 of the first lens element group G1, the focal length f2 of the second lens element group G2, and the focal length f3 of the third lens element group G3 is proper, and therefore a wide continuous zoom ratio range of the camera module 40 can be implemented.

It may be understood that a ratio of the image height IH of the camera module 40 to the focal length at the wide-angle end is IH/EFLT=0.15, and it may be understood that a target surface of the camera module 40 is large. Therefore, a chip with a larger size and more comprehensive functions may be disposed on the target surface of the camera module 40, to improve shooting performance of the camera module 40.

It may be understood that the focal length at the telephoto end EFLT of the camera module 40 and the focal length at the wide-angle end EFLW of the camera module 40 satisfy EFLT/EFLW=2.00. It may be understood that EFLT/EFLW of the camera module 40 has a wide value range, and the camera module 40 has both a large zoom ratio and a wide zoom ratio range, which can improve imaging quality of the camera module 40.

It may be understood that the total track length TTL1 of the camera module 40 and the focal length at the telephoto end EFLT of the camera module 40 satisfy TTL1/EFLT=1.39. It may be understood that TTL1/EFLW of the camera module 40 has a narrow value range. Therefore, the total track length TTL1 of the camera module 40 is small, which helps implement the miniaturized arrangement of the camera module 40.

It may be understood that the F-number Fno at the wide-angle end of the camera module 40 is small, and the F-number Fno at the wide-angle end of the camera module 40 is small, that is, the aperture at the wide-angle end of the camera module 40 is large. In this way, a wide aperture feature of the camera module 40 can be implemented, to ensure a high resolution and zoom continuity of the camera module 40.

It may be understood that the focusing stroke △L2 of the second lens element group G2 of the camera module 40 and the focusing stroke △L3 of the third lens element group G3 of the camera module 40 satisfy △L2/△L3=1.58. It may be understood that the total track length TTL1 of the camera module 40 may be small, which helps implement the miniaturized arrangement of the camera module 40. In addition, this achieves a faster focusing speed of the camera module 40, higher imaging quality of the camera module 40, a wider applicable scenario scope, a broader target audience base, and better user experience.

In addition, the size Sa of the first reflection element 458a is small, so that a length of the camera module 40 in the first direction can be reduced, thereby reducing the size of the camera module 40. When the camera module 40 is used in the camera module 40 or the electronic device 100, it is conductive to implementing an ultra-thin arrangement of the camera module 40 or the electronic device 100.

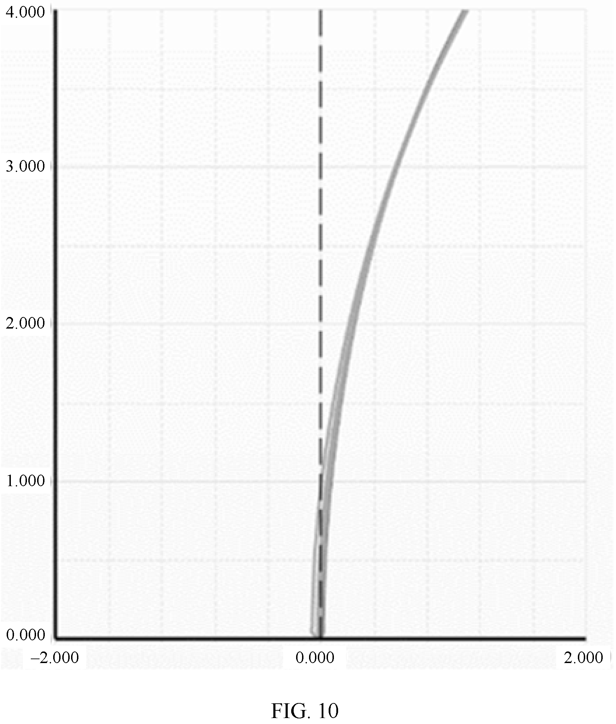

FIG. 10 is a diagram of imaging optical distortion of the camera module 40 in the second implementation.

As shown in FIG. 10, an optical distortion ratio of the camera module 40 in the second implementation of this application in all different field of views is less than 2%, an optical distortion degree of an image is small, and imaging quality of the camera module 40 is high.

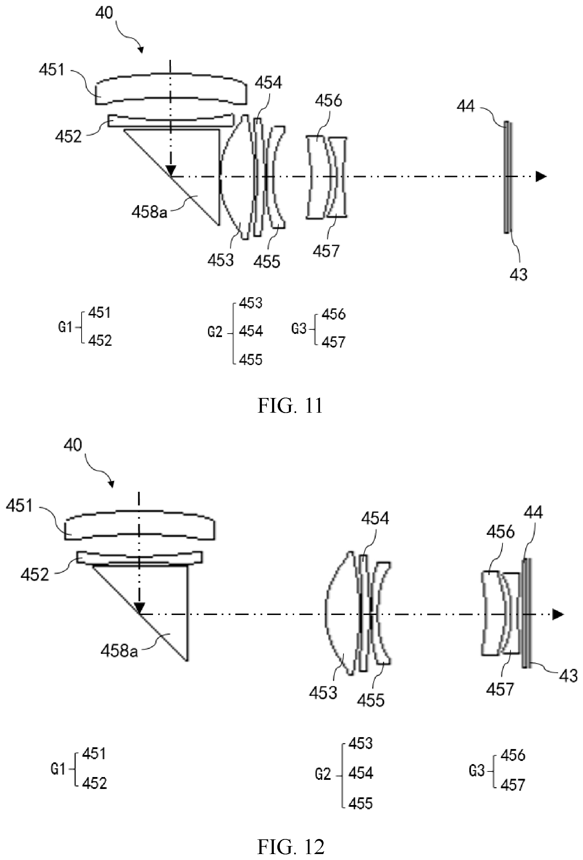

Third implementation: Refer to FIG. 11 and FIG. 12. FIG. 11 is a simplified diagram 1 of a partial structure of the camera module 40, at the wide-angle end, shown in FIG. 2 in yet another implementation. FIG. 12 is a simplified diagram 2 of a partial structure of the camera module 40, at a telephoto end, shown in FIG. 2 in yet another implementation. In this implementation, the camera module 40 has seven lens elements. The camera module 40 includes the first lens element 451, the second lens element 452, the first reflection element 458a, the third lens element 453, the fourth lens element 454, the fifth lens element 455, the sixth lens element 456, the seventh lens element 457, the optical filter 44, and the photosensitive chip 43 that are sequentially arranged from the object side to the image side. The first lens element 451, the third lens element 453, the fourth lens element 454, and the sixth lens element 456 all have positive focal power. The second lens element 452, the fifth lens element 455, and the seventh lens element 457 all have negative focal power.

It may be understood that the first lens element 451 and the second lens element 452 may form the first lens element group G1. The third lens element 453, the fourth lens element 454, and the fifth lens element 455 may form the second lens element group G2. The sixth lens element 456 and the seventh lens element 457 may form the third lens element group G3.

It may be understood that the first lens element 451 satisfies Nd=1.64 and Vd=23.5. It may be understood that a light penetration force of the lens element of the first lens element 451 is strong, and optical quality of the first lens element 451 is high, so that an image shot by the camera module 40 is clearer.

Some design parameters of the camera module 40 in the third implementation of this application are shown in Table 7.

**Table 7 Some design parameters of the lens elements of the camera module 40 in the third implementation**

| Surface number | Description | Surface type | R (mm) | Th (mm) | Nd | Vd | f (mm) |
|---|---|---|---|---|---|---|---|
| S1 | First lens element 451 | Odd aspherical surface | 21.93 | 1.71 | 1.64 | 23.5 | 352.01 |
| S2 | | Odd aspherical surface | 23.54 | 1.64 | | | |
| S3 | Second lens element 452 | Odd aspherical surface | -24.08 | 0.50 | 1.54 | 56.0 | -52.67 |
| S4 | | Odd aspherical surface | -149.38 | 0.15 | | | |
| S5 | First reflection element 458a | Spherical surface | Infinity | 7.00 | 1.77 | 49.6 | / |
| S6 | | Spherical surface | Infinity | 0.10 | | | |
| S7 | Third lens element 453 (Stop) | Odd aspherical surface | 5.79 | 2.51 | 1.50 | 81.6 | 9.07 |
| S8 | | Odd aspherical surface | -17.62 | 0.18 | | | |
| S9 | Fourth lens element 454 | Odd aspherical surface | -35.49 | 0.57 | 1.54 | 56.0 | 133.03 |
| S10 | | Odd aspherical surface | -23.97 | 0.10 | | | |
| S11 | Fifth lens element 455 | Odd aspherical surface | 25.49 | 0.50 | 1.66 | 20.37 | -29.01 |
| S12 | | Odd aspherical surface | 10.91 | 2.78 | | | |
| S13 | Sixth lens element 456 | Odd aspherical surface | -7.99 | 1.43 | 1.66 | 20.37 | 23.66 |
| S14 | | Odd aspherical surface | -5.68 | 0.39 | | | |
| S15 | Seventh lens element 457 | Odd aspherical surface | -32.49 | 0.50 | 1.54 | 56.0 | -9.51 |
| S16 | | Odd aspherical surface | 6.21 | 11.75 | | | |
| S17 | Optical filter 44 | Spherical surface | Infinity | 0.30 | 1.52 | 64.1 | / |
| S18 | | Spherical surface | Infinity | 0.24 | | | |
| | Imaging plane | Spherical surface | Infinity | 0.00 | | | |

In addition, aspheric coefficients of the lens elements of the camera module 40 in the third implementation of this application are shown in Table 8.

**Table 8 Aspheric coefficients of the lens elements of the camera module 40 in the third implementation**

| | Type | K | Norm R | A₂ | A₄ | A₆ | A₈ | A₁₀ |
|---|---|---|---|---|---|---|---|---|
| S1 | Odd aspherical surface | 0 | 5.5 | 0.00E+0 0 | -4.63E-01 | -3.50E-02 | 2.36E+0 0 | - 6.97E+0 0 |
| S2 | Odd aspherical surface | 0 | 4.8093197 | 0.00E+00 | -4.22E-01 | -1.54E-01 | 2.68E+00 | - 7.95E+0 0 |
| S3 | Odd aspherical surface | 0 | 4.782997 1 | 0.00E+0 0 | 4.77E-01 | - 2.48E+0 0 | 1.28E+0 1 | - 4.70E+0 1 |
| S4 | Odd aspherical surface | 0 | 4.861725 4 | 0.00E+0 0 | 6.79E-01 | - 2.50E+0 0 | 1.25E+0 1 | - 5.05E+0 1 |
| S7 | Odd aspherical surface | 0 | 4.095432 | 0.00E+0 0 | -4.06E-02 | -3.23E-02 | -1.39E-01 | 5.66E-01 |
| S8 | Odd aspherical surface | 0 | 1 | 0.00E+0 0 | 4.97E-05 | 1.37E-06 | 4.09E-08 | 2.33E-09 |
| S9 | Odd aspherical surface | 0 | 1 | 0.00E+0 0 | -1.17E-05 | 2.03E-06 | 2.16E-07 | 1.56E-08 |
| S10 | Odd aspherical surface | 0 | 3.825798 | 0.00E+0 0 | 4.02E-02 | -2.69E-01 | 4.15E+0 0 | - 1.77E+0 1 |
| S11 | Odd aspherical surface | 0 | 3.604028 8 | 0.00E+0 0 | 1.90E-01 | -6.65E-01 | 5.82E+0 0 | - 2.04E+0 1 |
| S12 | Odd aspherical surface | 0 | 3.325262 5 | 0.00E+0 0 | 2.60E-01 | -3.09E-01 | 2.26E+0 0 | - 6.69E+0 0 |
| S13 | Odd aspherical surface | 0 | 3.477755 | 0.00E+0 0 | 8.14E-01 | - 1.47E+0 0 | 6.01E+0 0 | - 1.91E+0 1 |
| S14 | Odd aspherical surface | 0 | 3.398844 7 | 0.00E+0 0 | 6.52E-01 | - 2.16E+0 0 | 1.39E+0 1 | - 5.07E+0 1 |
| S15 | Odd aspherical surface | 0 | 3.388698 3 | 0.00E+0 0 | - 3.49E+0 0 | 7.08E+0 0 | 4.79E+0 0 | - 7.36E+0 1 |
| S16 | Odd aspherical surface | 0 | 3.715350 7 | 0.00E+0 0 | - 5.36E+0 0 | 1.91E+0 1 | - 4.61E+0 1 | 6.78E+0 1 |

| | Type | A₁₂ | A₁₄ | A₁₆ | A₁₈ | A₂₀ | A₂₂ | A₂₄ |
|---|---|---|---|---|---|---|---|---|
| S1 | Odd aspherical surface | 1.19E+0 1 | - 9.49E+0 0 | 1.13E+0 0 | 2.84E+0 0 | - 1.16E+0 0 | -5.00E-02 | 0.00E+0 0 |
| S2 | Odd aspherical surface | 1.41E+0 1 | - 1.54E+0 1 | 1.15E+0 1 | - 5.93E+0 0 | 1.64E+0 0 | 2.35E-02 | 0.00E+0 0 |
| S3 | Odd aspherical surface | 1.03E+0 2 | - 1.34E+0 2 | 1.02E+0 2 | - 4.10E+0 1 | 6.59E+0 0 | 0.00E+0 0 | 0.00E+0 0 |
| S4 | Odd aspherical surface | 1.23E+0 2 | - 1.82E+0 2 | 1.59E+0 2 | - 7.59E+0 1 | 1.52E+0 1 | -2.82E-03 | 0.00E+0 0 |
| S7 | Odd aspherical surface | - 1.43E+0 0 | 1.98E+0 0 | - 1.70E+0 0 | 8.87E-01 | -2.82E-01 | 5.23E-02 | 0.00E+0 0 |
| S8 | Odd aspherical surface | 1.65E-10 | 2.54E-11 | -1.19E-23 | 0.00E+0 0 | 0.00E+0 0 | 0.00E+0 0 | 0.00E+0 0 |
| S9 | Odd aspherical surface | 1.00E-09 | 0.00E+0 0 | 0.00E+0 0 | 0.00E+0 0 | 0.00E+0 0 | 0.00E+0 0 | 0.00E+0 0 |
| S10 | Odd aspherical surface | 3.93E+0 1 | - 5.18E+0 1 | 4.09E+0 1 | - 1.79E+0 1 | 3.29E+0 0 | 3.26E-02 | 0.00E+0 0 |
| S11 | Odd aspherical surface | 3.96E+0 1 | - 4.66E+0 1 | 3.32E+0 1 | - 1.33E+0 1 | 2.23E+0 0 | 5.42E-02 | 0.00E+0 0 |
| S12 | Odd aspherical surface | 1.20E+0 1 | - 1.40E+0 1 | 1.09E+0 1 | - 5.22E+0 0 | 1.13E+0 0 | 3.05E-02 | 0.00E+0 0 |
| S13 | Odd aspherical surface | 4.15E+0 1 | - 5.93E+0 1 | 5.28E+0 1 | - 2.63E+0 1 | 5.62E+0 0 | -4.37E-02 | 0.00E+0 0 |
| S14 | Odd aspherical surface | 1.15E+0 2 | - 1.64E+0 2 | 1.41E+0 2 | - 6.42E+0 1 | 1.02E+0 1 | 1.05E+0 0 | 0.00E+0 0 |
| S15 | Odd aspherical surface | 2.20E+0 2 | - 3.55E+0 2 | 3.29E+0 2 | - 1.61E+0 2 | 3.17E+0 1 | - 1.77E+0 0 | 1.53E+0 0 |
| S16 | Odd aspherical surface | - 3.90E+0 1 | - 4.97E+0 1 | 1.13E+0 2 | - 8.20E+0 1 | 2.08E+0 1 | 4.15E-01 | 0.00E+0 0 |

A₂, A₄, A₆, A₈, A₁₀, A₁₂, A₁₄, A₁₆, A₁₈, A₂₀, A₂₂, and A₂₄ represent the aspheric coefficients. Polynomial coefficients (such as A₁ and A₃) that do not exist in the table are all 0.

It may be understood that in the 14 aspherical surfaces of the camera module 40 shown in Table 7 and Table 8, surface types z of all even and odd aspherical surfaces may be limited by using but not limited to the following aspheric formula: $z = \frac{{cr}^{2}}{1 + \sqrt{1 - \left(K+1\right) {c}^{2} {r}^{2}}} + {\sum }_{i} {A}_{i} {r}^{i}$

z represents a sagittal height of the aspherical surface; r represents a radial coordinate of the aspherical surface; c represents a curvature at a vertex of the aspherical surface; K represents a conic coefficient; and Aᵢ represents an i^{th}-order aspheric coefficient. By substituting the design parameters of the first lens element 451 to the seventh lens element 457 of the camera module 40 into the foregoing aspheric formula, the surface types of the object-side surface and the image-side surface of the first lens element 451 to the seventh lens element 457 of the camera module 40 in the third implementation of this application can be obtained.

Based on the data in Table 7 and Table 8, the following Table 9 shows some parameters of the camera module 40 in the third implementation of this application.

**Table 9 Some parameters of the camera module 40 in the third implementation**

| EFLT | Fno | TTL1 | Sa | IH |
|---|---|---|---|---|
| 24.00 | 3.26 | 33.32 | 3.50 | 3.60 |

The focal length at the telephoto end EFLT of the camera module 40 satisfies EFLT=24.00 millimeters. The F-number Fno at the wide-angle end of the camera module 40 satisfies Fno=3.26. The total track length TTL1 of the camera module 40 satisfies TTL1=33.32 millimeters. A size Sa of the first reflection element 458a of the camera module 40 satisfies Sa=3.50 millimeters. The image height IH of the camera module 40 satisfies IH=3.60 millimeters.

It may be understood that the focal length f1 of the first lens element group G1 of the camera module 40 satisfies f1=-64.61. The focal length f2 of the second lens element group G2 of the camera module 40 satisfies f1=11.04. The focal length f3 of the third lens element group G3 of the camera module 40 satisfies f3=-14.81.

In this case, the focal length f1 of the first lens element group G1 of the camera module 40 and the focal length f2 of the second lens element group G2 of the camera module 40 satisfy f1/f2=-5.85. The focal length f2 of the second lens element group G2 of the camera module 40 and the focal length f3 of the third lens element group G3 of the camera module 40 satisfy f2/f3=-0.75. It may be understood that allocation among the focal length f1 of the first lens element group G1, the focal length f2 of the second lens element group G2, and the focal length f3 of the third lens element group G3 is proper, and therefore a wide continuous zoom ratio range of the camera module 40 can be implemented.

It may be understood that a ratio of the image height IH of the camera module 40 to the focal length at the wide-angle end is IH/EFLT=0.15, and it may be understood that a target surface of the camera module 40 is large. Therefore, a chip with a larger size and more comprehensive functions may be disposed on the target surface of the camera module 40, to improve shooting performance of the camera module 40.

It may be understood that the focal length at the telephoto end EFLT of the camera module 40 and the focal length at the wide-angle end EFLW of the camera module 40 satisfy EFLT/EFLW=2.00. It may be understood that EFLT/EFLW of the camera module 40 has a wide value range, and the camera module 40 has both a large zoom ratio and a wide zoom ratio range, which can improve imaging quality of the camera module 40.

It may be understood that the total track length TTL1 of the camera module 40 and the focal length at the telephoto end EFLT of the camera module 40 satisfy TTL1/EFLT=1.35. It may be understood that TTL1/EFLW of the camera module 40 has a narrow value range. Therefore, the total track length TTL1 of the camera module 40 is small, which helps implement the miniaturized arrangement of the camera module 40.

It may be understood that the F-number Fno at the wide-angle end of the camera module 40 is small, and the F-number Fno at the wide-angle end of the camera module 40 is small, that is, the aperture at the wide-angle end of the camera module 40 is large. In this way, a wide aperture feature of the camera module 40 can be implemented, to ensure a high resolution and zoom continuity of the camera module 40.

It may be understood that the focusing stroke △L2 of the second lens element group G2 of the camera module 40 and the focusing stroke △L3 of the third lens element group G3 of the camera module 40 satisfy △L2/△L3=1.95. It may be understood that the total track length TTL1 of the camera module 40 may be small, which helps implement the miniaturized arrangement of the camera module 40. In addition, this achieves a faster focusing speed of the camera module 40, higher imaging quality of the camera module 40, a wider applicable scenario scope, a broader target audience base, and better user experience. In addition, the size Sa of the first reflection element 458a is small, so that a length of the camera module 40 in the first direction can be reduced, thereby reducing the size of the camera module 40. When the camera module 40 is used in the camera module 40 or the electronic device 100, it is conductive to implementing an ultra-thin arrangement of the camera module 40 or the electronic device 100.

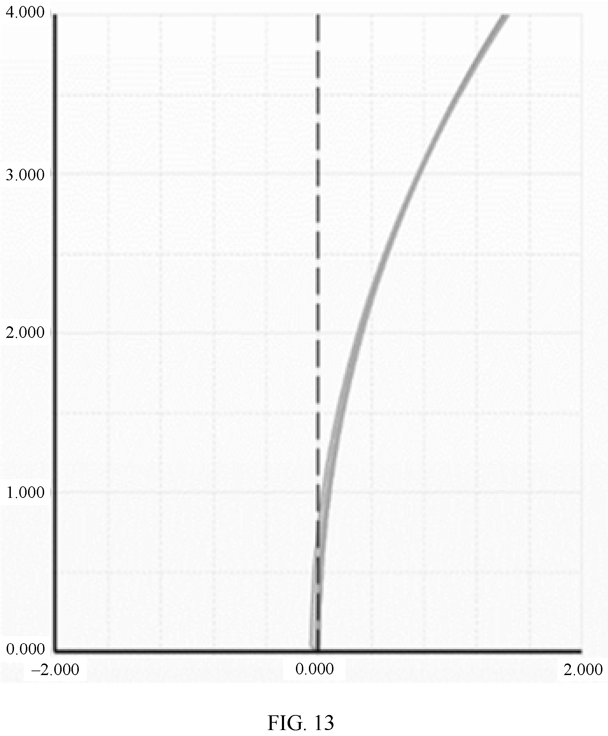

FIG. 13 is a diagram of imaging optical distortion of the camera module 40 in the third implementation.

As shown in FIG. 13, an optical distortion ratio of the camera module 40 in the third implementation of this application in all different field of views is less than 2%, an optical distortion degree of an image is small, and imaging quality of the camera module 40 is high.

Fourth implementation: Refer to FIG. 5 and FIG. 6. In this implementation, the camera module 40 includes seven lens elements. The camera module 40 includes the first lens element 451, the second lens element 452, the first reflection element 458a, the third lens element 453, the fourth lens element 454, the fifth lens element 455, the sixth lens element 456, the seventh lens element 457, the optical filter 44, and the photosensitive chip 43 that are sequentially arranged from the object side to the image side. The first lens element 451, the third lens element 453, the fifth lens element 455, and the seventh lens element 457 all have positive focal power. The second lens element 452, the fourth lens element 454, and the sixth lens element 456 all have negative focal power.

In this implementation, the first lens element 451 and the second lens element 452 may form the first lens element group G1. The third lens element 453 and the fourth lens element 454 may form the second lens element group G2. The fifth lens element 455 and the sixth lens element 456 may form the third lens element group G3.

In this implementation, the first lens element 451 satisfies Nd=1.64 and Vd=23.5. It may be understood that a light penetration force of the lens element of the first lens element 451 is strong, and optical quality of the first lens element 451 is high, so that an image shot by the camera module 40 is clearer.

In this implementation, the camera module 40 further includes the fourth lens element group G4. The seventh lens element 547 may form the fourth lens element group G4. The fourth lens element group G4 is a fixed lens element group. For example, the seventh lens element 457 may form the fourth lens element group G4. The focal length f4 of the fourth lens element group G4 may satisfy 27<f4<30. It may be understood that the fourth lens element group G4 may have positive focal power, and may be configured to converge light diverged by the third lens element group G3, so that the light can be better imaged on the imaging plane, and imaging quality of the camera module 40 is improved.

Some design parameters of the camera module 40 in the fourth implementation of this application are shown in Table 10.

**Table 10 Some design parameters of the lens elements of the camera module 40 in the fourth implementation**

| Surface number | Description | Surface type | R (mm) | Th (mm) | Nd | Vd | f (mm) |
|---|---|---|---|---|---|---|---|
| S1 | First lens element 451 | Odd aspherical surface | 23.01 | 1.69 | 1.64 | 23.5 | 99.46 |
| S2 | | Odd aspherical surface | 34.85 | 1.18 | | | |
| S3 | Second lens element 452 | Odd aspherical surface | -17.17 | 0.6 | 1.54 | 56.0 | -41.54 |
| S4 | | Odd aspherical surface | -71.56 | 0.15 | | | |
| S5 | First reflection element 458a | Spherical surface | Infinity | 7.00 | 1.77 | 49.6 | / |
| S6 | | Spherical surface | Infinity | 0.10 | | | |
| S7 | Third lens element 453 (Stop) | Odd aspherical surface | 5.47 | 3.07 | 1.50 | 81.6 | 7.79 |
| S8 | | Odd aspherical surface | -10.83 | 0.87 | | | |
| S9 | Fourth lens element 454 | Odd aspherical surface | -23.84 | 1.36 | 1.66 | 20.4 | -26.50 |
| S10 | | Odd aspherical surface | 70.02 | 0.86 | | | |
| S11 | Fifth lens element 455 | Odd aspherical surface | -9.10 | 2.39 | 1.66 | 20.4 | 21.13 |
| S12 | | Odd aspherical surface | -6.11 | 0.21 | | | |
| S13 | Sixth lens element 456 | Odd aspherical surface | -76.91 | 0.77 | 1.54 | 56.0 | -6.93 |
| S14 | | Odd aspherical surface | 3.99 | 10.10 | | | |
| S15 | Seventh lens element 457 | Odd aspherical surface | 19.86 | 0.87 | 1.54 | 56.0 | 28.39 |
| S16 | | Odd aspherical surface | -69.37 | 0.20 | | | |
| S17 | Optical filter 44 | Spherical surface | Infinity | 0.30 | 1.52 | 64.2 | / |
| S18 | | Spherical surface | Infinity | 0.14 | | | |
| | Imaging plane | Spherical surface | Infinity | 0.00 | | | |

In addition, aspheric coefficients of the lens elements of the camera module 40 in the fourth implementation of this application are shown in Table 11.

**Table 11 Aspheric coefficients of the lens elements of the camera module 40 in the fourth implementation**

| | Type | K | A₂ | A₄ | A₆ | A₈ | A₁₀ |
|---|---|---|---|---|---|---|---|
| S1 | Odd aspherical surface | 0.00E+00 | 0.00E+00 | -1.55E-04 | 4.14E-05 | -7.75E-06 | 9.21E-07 |
| S2 | Odd aspherical surface | 0.00E+00 | 0.00E+00 | -2.58E-04 | 1.24E-04 | -2.73E-05 | 3.44E-06 |
| S3 | Odd aspherical surface | 0.00E+00 | 0.00E+00 | 1.19E-03 | 1.41E-04 | -6.41E-05 | 9.53E-06 |
| S4 | Odd aspherical surface | 0.00E+00 | 0.00E+00 | 1.33E-03 | 4.86E-05 | -4.00E-05 | 6.07E-06 |
| S7 | Odd aspherical surface | 0.00E+00 | 0.00E+00 | -1.27E-04 | -1.13E-05 | -2.34E-07 | 1.20E-07 |
| S8 | Odd aspherical surface | 0.00E+00 | 0.00E+00 | 1.60E-03 | -1.21E-04 | 1.49E-05 | -2.11E-06 |
| S9 | Odd aspherical surface | 0.00E+00 | 0.00E+00 | 2.01E-03 | -1.57E-04 | 3.25E-05 | -6.88E-06 |
| S10 | Odd aspherical surface | 0.00E+00 | 0.00E+00 | 2.48E-03 | 1.32E-05 | 7.09E-06 | 2.24E-06 |
| S11 | Odd aspherical surface | 0.00E+00 | 0.00E+00 | 4.39E-03 | -4.33E-04 | 7.82E-05 | -9.98E-06 |
| S12 | Odd aspherical surface | 0.00E+00 | 0.00E+00 | -6.43E-04 | 2.02E-03 | -6.95E-04 | 1.65E-04 |
| S13 | Odd aspherical surface | 0.00E+00 | 0.00E+00 | -3.38E-02 | 9.29E-03 | -1.86E-03 | 2.53E-04 |
| S14 | Odd aspherical surface | 0.00E+00 | 0.00E+00 | -3.32E-02 | 8.80E-03 | -1.98E-03 | 3.36E-04 |
| S15 | Odd aspherical surface | 0.00E+00 | 0.00E+00 | 1.41E-03 | -8.03E-04 | 1.35E-04 | -1.24E-05 |
| S16 | Odd aspherical surface | 0.00E+00 | 0.00E+00 | 7.35E-03 | -2.39E-03 | 3.44E-04 | -2.66E-05 |

| | Type | A₁₂ | A₁₄ | A₁₆ | A₁₈ | A₂₀ | A₂₂ |
|---|---|---|---|---|---|---|---|
| S1 | Odd aspherical surface | -6.46E-08 | 2.90E-09 | -8.25E-11 | 1.35E-12 | -8.86E-15 | -1.99E-17 |
| S2 | Odd aspherical surface | -2.56E-07 | 1.20E-08 | -3.56E-10 | 5.86E-12 | -3.53E-14 | 0.00E+00 |
| S3 | Odd aspherical surface | -8.06E-07 | 4.24E-08 | -1.40E-09 | 2.69E-11 | -2.28E-13 | -2.34E-16 |
| S4 | Odd aspherical surface | -5.03E-07 | 2.45E-08 | -6.92E-10 | 1.04E-11 | -6.53E-14 | -8.18E-19 |
| S7 | Odd aspherical surface | -3.77E-08 | 4.20E-09 | -2.08E-10 | 9.47E-13 | 2.88E-13 | -7.85E-15 |
| S8 | Odd aspherical surface | 2.38E-07 | -1.80E-08 | 8.39E-10 | -2.17E-11 | 2.46E-13 | -6.07E-16 |
| S9 | Odd aspherical surface | 1.19E-06 | -1.35E-07 | 9.30E-09 | -3.61E-10 | 6.19E-12 | -8.00E-15 |
| S10 | Odd aspherical surface | -8.93E-07 | 1.68E-07 | -1.41E-08 | 2.93E-10 | 2.80E-11 | -1.23E-12 |
| S11 | Odd aspherical surface | -2.65E-07 | 3.24E-07 | -4.98E-08 | 3.37E-09 | -8.80E-11 | 0.00E+00 |
| S12 | Odd aspherical surface | -2.95E-05 | 3.65E-06 | -2.78E-07 | 1.11E-08 | -1.31E-10 | -2.33E-12 |
| S13 | Odd aspherical surface | -2.37E-05 | 1.57E-06 | -7.22E-08 | 1.70E-09 | 6.50E-12 | -5.60E-13 |
| S14 | Odd aspherical surface | -4.15E-05 | 3.58E-06 | -1.98E-07 | 5.97E-09 | -4.64E-11 | -1.33E-12 |
| S15 | Odd aspherical surface | 6.06E-07 | -1.21E-08 | -4.89E-12 | 0.00E+00 | 0.00E+00 | 0.00E+00 |
| S16 | Odd aspherical surface | 1.09E-06 | -1.88E-08 | -3.40E-12 | 0.00E+00 | 0.00E+00 | 0.00E+00 |

A₂, A₄, A₆, A₈, A₁₀, A₁₂, A₁₄, A₁₆, A₁₈, A₂₀, and A₂₂ represent the aspheric coefficients. Polynomial coefficients (such as A₁ and A₃) that do not exist in the table are all 0.

It may be understood that in the 14 aspherical surfaces of the camera module 40 shown in Table 10 and Table 11, surface types z of all even and odd aspherical surfaces may be limited by using but not limited to the following aspheric formula: $z = \frac{{cr}^{2}}{1 + \sqrt{1 - \left(K+1\right) {c}^{2} {r}^{2}}} + {\sum }_{i} {A}_{i} {r}^{i}$

z represents a sagittal height of the aspherical surface; r represents a radial coordinate of the aspherical surface; c represents a curvature at a vertex of the aspherical surface; K represents a conic coefficient; and Aᵢ represents an i^{th}-order aspheric coefficient. By substituting the design parameters of the first lens element 451 to the seventh lens element 457 of the camera module 40 into the foregoing aspheric formula, the surface types of the object-side surface and the image-side surface of the first lens element 451 to the seventh lens element 457 of the camera module 40 in the fourth implementation of this application can be obtained.

Based on the data in Table 10 and Table 11, the following Table 12 shows some parameters of the camera module 40 in the fourth implementation of this application.

**Table 12 Some parameters of the camera module 40 in the fourth implementation**

| EFLT | Fno | TTL1 | Sa | IH |
|---|---|---|---|---|
| 24.00 | 3.26 | 33.30 | 3.50 | 3.60 |

The focal length at the telephoto end EFLT of the camera module 40 satisfies EFLT=24.00 millimeters. The F-number Fno at the wide-angle end of the camera module 40 satisfies Fno=3.26. The total track length TTL1 of the camera module 40 satisfies TTL1=33.30 millimeters. A size Sa of the first reflection element 458a of the camera module 40 satisfies Sa=3.50 millimeters. The image height IH of the camera module 40 satisfies IH=3.60 millimeters.

It may be understood that the focal length f1 of the first lens element group G1 of the camera module 40 satisfies f1=-40.62. The focal length f2 of the second lens element group G2 of the camera module 40 satisfies f1=11.36. The focal length f3 of the third lens element group G3 of the camera module 40 satisfies f3=-18.52. The focal length f4 of the fourth lens element group G4 of the camera module 40 satisfies f4=28.39.

In this case, the focal length f1 of the first lens element group G1 of the camera module 40 and the focal length f2 of the second lens element group G2 of the camera module 40 satisfy f1/f2=-3.58. The focal length f2 of the second lens element group G2 of the camera module 40 and the focal length f3 of the third lens element group G3 of the camera module 40 satisfy f2/f3=-0.61. It may be understood that allocation among the focal length f1 of the first lens element group G1, the focal length f2 of the second lens element group G2, and the focal length f3 of the third lens element group G3 is proper, and therefore a wide continuous zoom ratio range of the camera module 40 can be implemented.

It may be understood that a ratio of the image height IH of the camera module 40 to the focal length at the wide-angle end is IH/EFLT=0.15, and it may be understood that a target surface of the camera module 40 is large. Therefore, a chip with a larger size and more comprehensive functions may be disposed on the target surface of the camera module 40, to improve shooting performance of the camera module 40.

It may be understood that the focal length at the telephoto end EFLT of the camera module 40 and the focal length at the wide-angle end EFLW of the camera module 40 satisfy EFLT/EFLW=2.00. It may be understood that EFLT/EFLW of the camera module 40 has a wide value range, and the camera module 40 has both a large zoom ratio and a wide zoom ratio range, which can improve imaging quality of the camera module 40.

It may be understood that the total track length TTL1 of the camera module 40 and the focal length at the telephoto end EFLT of the camera module 40 satisfy TTL1/EFLT=1.39. It may be understood that TTL1/EFLW of the camera module 40 has a narrow value range. Therefore, the total track length TTL1 of the camera module 40 is small, which helps implement the miniaturized arrangement of the camera module 40.

It may be understood that the F-number Fno at the wide-angle end of the camera module 40 is small, and the F-number Fno at the wide-angle end of the camera module 40 is small, that is, the aperture at the wide-angle end of the camera module 40 is large. In this way, a wide aperture feature of the camera module 40 can be implemented, to ensure a high resolution and zoom continuity of the camera module 40.

It may be understood that the focusing stroke △L2 of the second lens element group G2 of the camera module 40 and the focusing stroke △L3 of the third lens element group G3 of the camera module 40 satisfy △L2/△L3=2.82. It may be understood that the total track length TTL1 of the camera module 40 may be small, which helps implement the miniaturized arrangement of the camera module 40. In addition, this achieves a faster focusing speed of the camera module 40, higher imaging quality of the camera module 40, a wider applicable scenario scope, a broader target audience base, and better user experience.

In addition, the size Sa of the first reflection element 458a is small, so that a length of the camera module 40 in the first direction can be reduced, thereby reducing the size of the camera module 40. When the camera module 40 is used in the camera module 40 or the electronic device 100, it is conductive to implementing an ultra-thin arrangement of the camera module 40 or the electronic device 100.

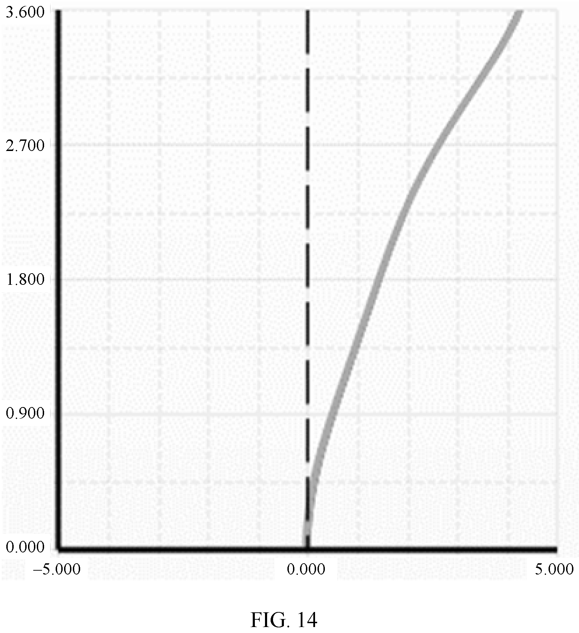

FIG. 14 is a diagram of imaging optical distortion of the camera module 40 in the fourth implementation.

As shown in FIG. 14, an optical distortion ratio of the camera module 40 in the fourth implementation of this application in all different field of views is less than 2%, an optical distortion degree of an image is small, and imaging quality of the camera module 40 is high.

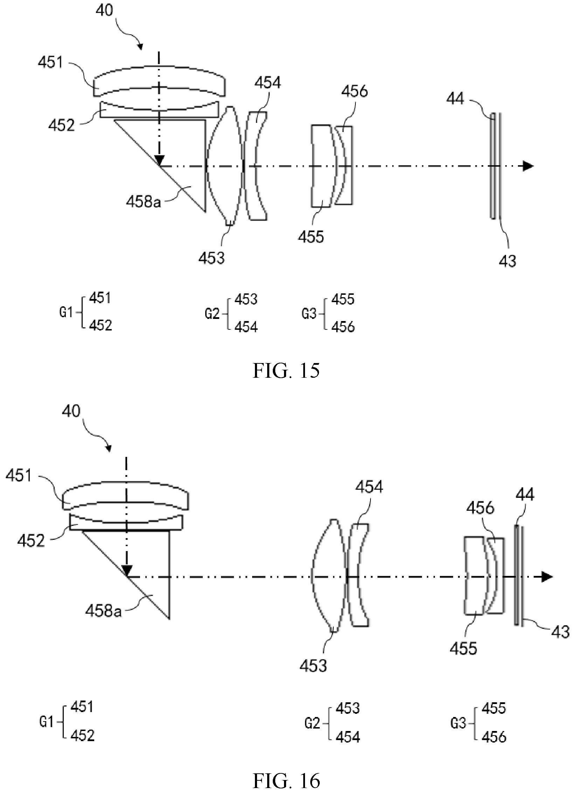

Fifth implementation: Refer to FIG. 15 and FIG. 16. FIG. 15 is a simplified diagram 3 of a partial structure of the camera module 40, at the wide-angle end, shown in FIG. 2 in still yet another implementation. FIG. 16 is a simplified diagram 3 of a partial structure of the camera module 40, at a telephoto end, shown in FIG. 2 in still yet another implementation. In this implementation, the camera module 40 has six lens elements. The camera module 40 includes the first lens element 451, the second lens element 452, the first reflection element 458a, the third lens element 453, the fourth lens element 454, the fifth lens element 455, the sixth lens element 456, the optical filter 44, and the photosensitive chip 43 that are sequentially arranged from the object side to the image side. The first lens element 451, the third lens element 453, and the fifth lens element 455 all have positive focal power. The second lens element 452, the fourth lens element 454, and the sixth lens element 456 all have negative focal power.

In this implementation, the first lens element 451 and the second lens element 452 may form the first lens element group G1. The third lens element 453 and the fourth lens element 454 may form the second lens element group G2. The fifth lens element 455 and the sixth lens element 456 may form the third lens element group G3.

In this implementation, the first lens element 451 satisfies Nd=1.64 and Vd=23.5. It may be understood that a light penetration force of the lens element of the first lens element 451 is strong, and optical quality of the first lens element 451 is high, so that an image shot by the camera module 40 is clearer.

It may be understood that, in Table 13 and Table 14, S15 and S16 may respectively represent an object-side surface and an image-side surface of the optical filter 44.

Some design parameters of the camera module 40 in the fifth implementation of this application are shown in Table 13.

**Table 13 Some design parameters of the lens elements of the camera module 40 in the fifth implementation**

| Surface number | Description | Surface type | R (mm) | Th (mm) | Nd | Vd | f (mm) |
|---|---|---|---|---|---|---|---|
| S1 | First lens element 451 | Odd aspherical surface | 18.60 | 1.61 | 1.64 | 23.5 | 96.94 |
| S2 | | Odd aspherical surface | 25.58 | 1.69 | | | |
| S3 | Second lens element 452 | Odd aspherical surface | -21.39 | 0.50 | 1.54 | 56.0 | -27.13 |
| S4 | | Odd aspherical surface | 48.51 | 0.20 | | | |
| S5 | First reflection element 458a | Spherical surface | Infinity | 7.00 | 1.77 | 49.6 | / |
| S6 | | Spherical surface | Infinity | 0.10 | | | |
| S7 | Third lens element 453 (Stop) | Odd aspherical surface | 6.31 | 2.69 | 1.50 | 81.6 | 8.82 |
| S8 | | Odd aspherical surface | -12.40 | 0.12 | | | |
| S9 | Fourth lens element 454 | Odd aspherical surface | 26.08 | 0.85 | 1.66 | 20.4 | -29.24 |
| S10 | | Odd aspherical surface | 11.01 | 4.43 | | | |
| S11 | Fifth lens element 455 | Odd aspherical surface | -11.35 | 1.72 | 1.66 | 20.4 | 23.15 |
| S12 | | Odd aspherical surface | -6.94 | 0.66 | | | |
| S13 | Sixth lens element 456 | Odd aspherical surface | -13.28 | 0.51 | 1.54 | 56.0 | -10.54 |
| S14 | | Odd aspherical surface | 10.29 | 10.57 | | | |
| S15 | Optical filter 44 | Spherical surface | Infinity | 0.21 | 1.52 | 64.20 | / |
| S16 | | Spherical surface | Infinity | 1.00 | | | |
| | Imaging plane | Spherical surface | Infinity | 0.00 | | | / |

R represents a curvature radius of each of the first lens element 451 to the sixth lens element 456, the first reflection element 458a, and the optical filter 44 of the camera module 40. Nd represents a refractive index of a material of each of the first lens element 451 to the sixth lens element 456, the first reflection element 458a, and the optical filter 44 of the camera module 40. Vd represents an Abbe number of each of the first lens element 451 to the sixth lens element 456, the first reflection element 458a, and the optical filter 44 of the camera module 40.

In addition, Th represents a thickness of each of the first lens element 451 to the sixth lens element 456, and the optical filter 44 of the camera module 40. A thickness of S14 is a distance between the image-side surface of the sixth lens element 456 and the object-side surface of the optical filter 44. A thickness of S15 is a distance between the object-side surface of the optical filter 44 and the image-side surface of the optical filter 44. A thickness of S16 is a distance between the image-side surface of the optical filter 44 and the imaging plane.

In addition, aspheric coefficients of the lens elements of the camera module 40 in the fifth implementation of this application are shown in Table 14.

**Table 14 Aspheric coefficients of the lens elements of the camera module 40 in the fifth implementation**

| | Type | Norm R | K | A₂ | A₄ | A₆ | A₈ | A₁₀ |
|---|---|---|---|---|---|---|---|---|
| S1 | Odd aspherical surface | 5.00E+00 | 0.00E+00 | 0.00E+00 | 4.00E-02 | 5.32E-01 | - 3.40E+00 | 1.54E+01 |
| S2 | Odd aspherical surface | 4.49E+00 | 0.00E+00 | 0.00E+00 | 5.36E-03 | 5.52E-01 | - 3.82E+00 | 1.64E+01 |
| S3 | Odd aspherical surface | 4.42E+00 | 0.00E+00 | 0.00E+00 | -3.42E-01 | 6.33E-01 | - 6.03E+00 | 3.35E+01 |
| S4 | Odd aspherical surface | 4.47E+00 | 0.00E+00 | 0.00E+00 | -3.03E-01 | 4.33E-01 | - 3.79E+00 | 2.25E+01 |
| S7 | Odd aspherical surface | 4.10E+00 | 0.00E+00 | 0.00E+00 | -4.12E-02 | 1.21E-01 | -9.82E-01 | 3.86E+00 |
| S8 | Odd aspherical surface | 4.19E+00 | 0.00E+00 | 0.00E+00 | 2.11E-01 | - 1.22E+00 | 8.63E+00 | - 3.03E+01 |
| S9 | Odd aspherical surface | 3.72E+00 | 0.00E+00 | 0.00E+00 | 8.04E-02 | -9.48E-01 | 5.69E+00 | - 1.69E+01 |
| S10 | Odd aspherical surface | 3.41E+00 | 0.00E+00 | 0.00E+00 | 1.09E-01 | -3.00E-01 | 1.91E+00 | - 5.60E+00 |
| S11 | Odd aspherical surface | 3.50E+00 | 0.00E+00 | 0.00E+00 | 5.25E-01 | -4.30E-01 | 1.76E+00 | - 4.48E+00 |
| S12 | Odd aspherical surface | 3.30E+00 | 0.00E+00 | 0.00E+00 | 3.13E-01 | -4.92E-01 | 3.52E+00 | - 1.26E+01 |
| S13 | Odd aspherical surface | 3.29E+00 | 0.00E+00 | 0.00E+00 | - 2.27E+00 | 3.99E+00 | 1.41E-01 | - 2.52E+01 |
| S14 | Odd aspherical surface | 3.52E+00 | 0.00E+00 | 0.00E+00 | - 2.90E+00 | 7.91E+00 | - 1.47E+01 | 1.46E+01 |

| | Type | A₁₂ | A₁₄ | A₁₆ | A₁₈ | A₂₀ | A₂₂ | |
|---|---|---|---|---|---|---|---|---|
| S1 | Odd aspherical surface | - 3.91E+01 | 5.82E+01 | - 5.01E+01 | 2.24E+01 | - 3.35E+00 | -4.21E-01 | |
| S2 | Odd aspherical surface | - 3.82E+01 | 5.17E+01 | - 3.99E+01 | 1.57E+01 | - 2.18E+00 | -7.14E-02 | |
| S3 | Odd aspherical surface | - 9.73E+01 | 1.62E+02 | - 1.57E+02 | 8.07E+01 | - 1.60E+01 | -8.50E-01 | |
| S4 | Odd aspherical surface | - 6.92E+01 | 1.21E+02 | - 1.23E+02 | 6.83E+01 | - 1.59E+01 | 0.00E+00 | |
| S7 | Odd aspherical surface | - 8.93E+00 | 1.23E+01 | - 9.61E+00 | 3.39E+00 | 1.60E-01 | -3.20E-01 | |
| S8 | Odd aspherical surface | 6.21E+01 | - 7.88E+01 | 6.09E+01 | - 2.60E+01 | 4.42E+00 | 1.77E-01 | |
| S9 | Odd aspherical surface | 3.07E+01 | - 3.63E+01 | 2.73E+01 | - 1.19E+01 | 2.24E+00 | 0.00E+00 | |
| S10 | Odd aspherical surface | 1.10E+01 | - 1.46E+01 | 1.24E+01 | - 5.98E+00 | 1.23E+00 | 0.00E+00 | |
| S11 | Odd aspherical surface | 8.14E+00 | - 1.06E+01 | 9.44E+00 | - 5.19E+00 | 1.44E+00 | -1.23E-01 | |
| S12 | Odd aspherical surface | 2.95E+01 | - 4.41E+01 | 3.91E+01 | - 1.79E+01 | 2.94E+00 | 1.46E-01 | |
| S13 | Odd aspherical surface | 8.06E+01 | - 1.35E+02 | 1.22E+02 | - 4.78E+01 | - 3.08E+00 | 5.38E+00 | |
| S14 | Odd aspherical surface | 5.86E+00 | - 4.29E+01 | 6.04E+01 | - 3.82E+01 | 9.26E+00 | 0.00E+00 | |

A₂, A₄, A₆, A₈, A₁₀, A₁₂, A₁₄, A₁₆, A₁₈, A₂₀, and A₂₂ represent the aspheric coefficients. Polynomial coefficients (such as A₁ and A₃) that do not exist in the table are all 0. Norm R represents a normalized radius of an object-side surface and an image-side surface of each of the first lens element 451 to the sixth lens element 456.

It may be understood that in the 12 aspherical surfaces of the camera module 40 shown in Table 13 and Table 14, surface types z of all even and odd aspherical surfaces may be limited by using but not limited to the following aspheric formula: $z = \frac{{cr}^{2}}{1 + \sqrt{1 - \left(K+1\right) {c}^{2} {r}^{2}}} + {\sum }_{i} {A}_{i} {r}^{i}$

z represents a sagittal height of the aspherical surface; r represents a radial coordinate of the aspherical surface; c represents a curvature at a vertex of the aspherical surface; K represents a conic coefficient; and Aᵢ represents an i^{th}-order aspheric coefficient. By substituting the design parameters of the first lens element 451 to the sixth lens element 456 of the camera module 40 into the foregoing aspheric formula, the surface types of the object-side surface and the image-side surface of the first lens element 451 to the sixth lens element 456 of the camera module 40 in the fifth implementation of this application can be obtained.

Based on the data in Table 13 and Table 14, the following Table 15 shows some parameters of the camera module 40 in the fifth implementation of this application.

**Table 15 Some parameters of the camera module 40 in the fifth implementation**

| EFLT | Fno | TTL1 | Sa | IH |
|---|---|---|---|---|
| 24.00 | 3.26 | 33.32 | 3.50 | 3.60 |

The focal length at the telephoto end EFLT of the camera module 40 satisfies EFLT=24.00 millimeters. The F-number Fno at the wide-angle end of the camera module 40 satisfies Fno=3.26. The total track length TTL1 of the camera module 40 satisfies TTL1=33.32 millimeters. A size Sa of the first reflection element 458a of the camera module 40 satisfies Sa=3.50 millimeters. The image height IH of the camera module 40 satisfies IH=3.60 millimeters.

It may be understood that the focal length f1 of the first lens element group G1 of the camera module 40 satisfies f1=-55.05. The focal length f2 of the second lens element group G2 of the camera module 40 satisfies f1=10.79. The focal length f3 of the third lens element group G3 of the camera module 40 satisfies f3=-14.27.

In this case, the focal length f1 of the first lens element group G1 of the camera module 40 and the focal length f2 of the second lens element group G2 of the camera module 40 satisfy f1/f2=-8.54. The focal length f2 of the second lens element group G2 of the camera module 40 and the focal length f3 of the third lens element group G3 of the camera module 40 satisfy f2/f3=-0.96. It may be understood that allocation among the focal length f1 of the first lens element group G1, the focal length f2 of the second lens element group G2, and the focal length f3 of the third lens element group G3 is proper, and therefore a wide continuous zoom ratio range of the camera module 40 can be implemented.

It may be understood that a ratio of the image height IH of the camera module 40 to the focal length at the wide-angle end is IH/EFLT=0.15, and it may be understood that a target surface of the camera module 40 is large. Therefore, a chip with a larger size and more comprehensive functions may be disposed on the target surface of the camera module 40, to improve shooting performance of the camera module 40.

It may be understood that the focal length at the telephoto end EFLT of the camera module 40 and the focal length at the wide-angle end EFLW of the camera module 40 satisfy EFLT/EFLW=2.00. It may be understood that EFLT/EFLW of the camera module 40 has a wide value range, and the camera module 40 has both a large zoom ratio and a wide zoom ratio range, which can improve imaging quality of the camera module 40.

It may be understood that the total track length TTL1 of the camera module 40 and the focal length at the telephoto end EFLT of the camera module 40 satisfy TTL1/EFLT=1.33. It may be understood that TTL1/EFLW of the camera module 40 has a narrow value range. Therefore, the total track length TTL1 of the camera module 40 is small, which helps implement the miniaturized arrangement of the camera module 40.

It may be understood that the F-number Fno at the wide-angle end of the camera module 40 is small, and the F-number Fno at the wide-angle end of the camera module 40 is small, that is, the aperture at the wide-angle end of the camera module 40 is large. In this way, a wide aperture feature of the camera module 40 can be implemented, to ensure a high resolution and zoom continuity of the camera module 40.

It may be understood that the focusing stroke △L2 of the second lens element group G2 of the camera module 40 and the focusing stroke △L3 of the third lens element group G3 of the camera module 40 satisfy △L2/△L3=2.65. It may be understood that the total track length TTL1 of the camera module 40 may be small, which helps implement the miniaturized arrangement of the camera module 40. In addition, this achieves a faster focusing speed of the camera module 40, higher imaging quality of the camera module 40, a wider applicable scenario scope, a broader target audience base, and better user experience.

In addition, the size Sa of the first reflection element 458a is small, so that a length of the camera module 40 in the first direction can be reduced, thereby reducing the size of the camera module 40. When the camera module 40 is used in the camera module 40 or the electronic device 100, it is conductive to implementing an ultra-thin arrangement of the camera module 40 or the electronic device 100.

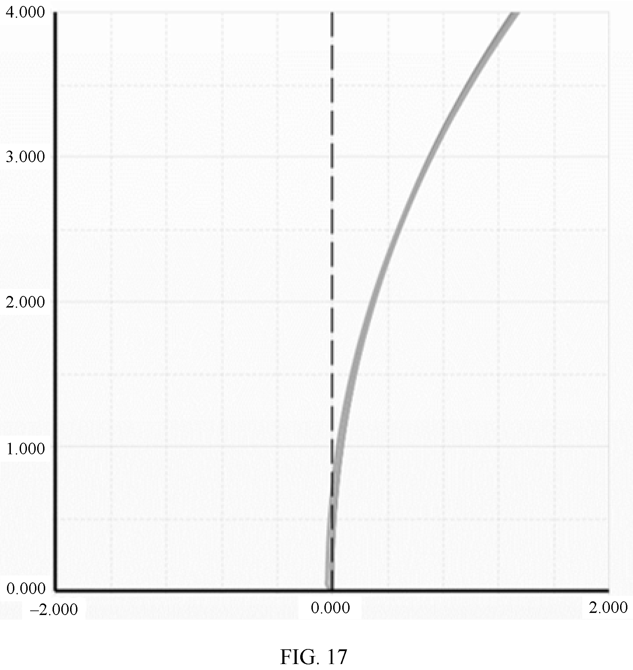

FIG. 17 is a diagram of imaging optical distortion of the camera module 40 in the fifth implementation.

As shown in FIG. 17, an optical distortion ratio of the camera module 40 in the fifth implementation of this application in all different field of views is less than 5%, an optical distortion degree of an image is small, and imaging quality of the camera module 40 is high.

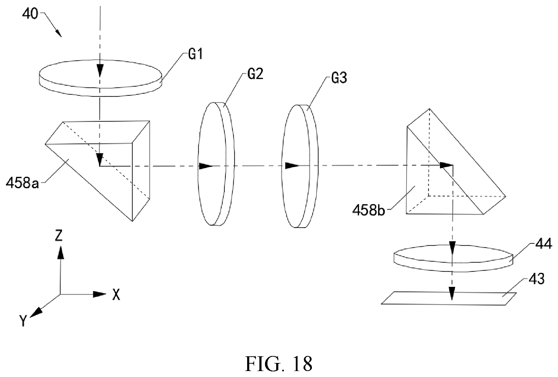

FIG. 18 is a simplified diagram of a partial structure of the camera module 40 shown in FIG. 2 in another implementation.

As shown in FIG. 18, the camera module 40 may further include a second reflection element 458b. For example, the second reflection element 458b may be located on an image side of the third lens element group G3. In other words, the second reflection element 458b may be located on a side that is of the third lens element group G3 and that is away from the second lens element group G2.

For example, the second reflection element 458b is configured to change the optical axis in the second direction to an optical axis in a third direction, and both the third direction and the first direction intersect the second direction. It may be understood that the second reflection element 458b enables the photosensitive chip 43 to have a larger target surface. Therefore, a chip with a larger size and more comprehensive functions may be disposed on the target surface of the camera module 40, to improve shooting performance of the camera module 40.

It should be noted that embodiments in this application and features in embodiments may be combined with each other without a conflict, and any combination of features in different embodiments also falls within the protection scope of this application. In other words, the foregoing described plurality of embodiments may be further combined according to an actual requirement.

It should be noted that all the foregoing accompanying drawings are example figures of this application, and do not represent actual sizes of products. In addition, a size proportional relationship between components in the accompanying drawings is not intended to limit an actual product in this application. The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising a first lens element group, a first reflection element, a second lens element group, a third lens element group, and a photosensitive chip that are sequentially arranged from an object side to an image side, wherein the first lens element group is a fixed lens element group, the first reflection element is configured to change an optical axis in a first direction to an optical axis in a second direction, and the first direction intersects the second direction;
the camera module further comprises a first driving mechanism and a second driving mechanism;
the first driving mechanism is connected to the second lens element group, and the first driving mechanism is configured to drive the second lens element group to move along the optical axis in the second direction; and
the second driving mechanism is connected to the third lens element group, and the second driving mechanism is configured to drive the third lens element group to move along the optical axis in the second direction.

2. The camera module according to claim 1, wherein the first lens element group and the third lens element group have negative focal power, and the second lens element group has positive focal power; and
a focal length f1 of the first lens element group, a focal length f2 of the second lens element group, and a focal length f3 of the third lens element group satisfy f1/f2<-3 and -1<f2/f3<-0.5.

3. The camera module according to claim 2, wherein the focal length f1 of the first lens element group satisfies -40<f1<-30; and/or the focal length f2 of the second lens element group satisfies 7<f2<12; and/or the focal length f3 of the third lens element group satisfies -18<f3<-12.

4. The camera module according to any one of claims 1 to 3, wherein the first lens element group comprises a first lens element, the first lens element has positive focal power, and an object-side surface of the first lens element is a convex surface.

5. The camera module according to claim 4, wherein a material of the first lens element satisfies Nd<1.65 and Vd>50, Nd represents a refractive index of the material, and Vd represents an Abbe number.

6. The camera module according to claim 4 or 5, wherein the first lens element group comprises a second lens element, and the second lens element is located on an image side of the first lens element; and
a focal length f11 of the first lens element satisfies f11>0, and a focal length f12 of the second lens element satisfies f12<0.

7. The camera module according to any one of claims 1 to 6, wherein the second lens element group comprises a third lens element, a fourth lens element, and a fifth lens element, and at least one of the third lens element, the fourth lens element, and the fifth lens element has negative focal power.

8. The camera module according to any one of claims 1 to 7, wherein the optical lens further comprises a stop, and the stop is located between the first lens element group and the second lens element group.

9. The camera module according to any one of claims 1 to 8, wherein the camera module satisfies 0.1≤IH/EFLT≤0.5, IH represents an image height of the camera module, and EFLT represents a focal length at a telephoto end of the camera module.

10. The camera module according to any one of claims 1 to 9, wherein the camera module further comprises a fourth lens element group, the fourth lens element group is located on an image side of the third lens element group, and the fourth lens element group has positive focal power.

11. The camera module according to claim 10, wherein the fourth lens element group is a fixed lens element group.

12. The camera module according to any one of claims 1 to 11, wherein the camera module further comprises a second reflection element, the second reflection element is located between the third lens element group and the optical filter, the second reflection element is configured to change the optical axis in the second direction to an optical axis in a third direction, and both the third direction and the first direction intersect the second direction.

13. The camera module according to any one of claims 1 to 12, wherein when the camera module is located at a wide-angle end, the first driving mechanism drives the second lens element group to move in a direction away from the first reflection element, and the second driving mechanism drives the third lens element group to move in the direction away from the first reflection element; and
when the camera module is located at the telephoto end, the first driving mechanism drives the second lens element group to move in a direction toward the first reflection element, and the second driving mechanism drives the third lens element group to move in the direction toward the first reflection element.

14. The camera module according to claims 1 to 13, wherein the focal length at the telephoto end EFLT and a focal length at the wide-angle end EFLW satisfy 1.2≤EFLT/EFLW≤3.

15. The camera module according to any one of claims 1 to 14, wherein the camera module satisfies 0.6≤TTL1/EFLT≤1.8, TTL1 represents a distance from a vertex at which an object-side surface of the first reflection element intersects a reflective surface of the first reflection element to an imaging plane in an optical axis direction of the camera module.

16. The camera module according to any one of claims 1 to 15, wherein the wide-angle end of the camera module satisfies 1.4≤Fno≤4, and Fno represents an F-number at the wide-angle end of the camera module.

17. The camera module according to any one of claims 1 to 16, wherein the camera module satisfies 1≤△L2/△L3≤2, and 0.1≤△L2/TTL1≤0.3, △L2 represents a stroke of the second lens element group moving along the optical axis in the second direction, and △L3 represents a stroke of the third lens element group moving along the optical axis in the second direction.

18. The camera module according to any one of claims 1 to 17, wherein a zoom ratio of the camera module is within a range from three times to five times.

19. The camera module according to any one of claims 1 to 18, wherein an equivalent focal length of the camera module is within a range from 70 millimeters to 120 millimeters.

20. An electronic device, comprising a housing and the camera module according to any one of claims 1 to 18, wherein the camera module is mounted in the housing.
